(19) **Europäisches Patentamt**
**European Patent Office**
**Office européen des brevets**

(11) **EP 4 517 851 A1**

(12) **EUROPEAN PATENT APPLICATION**

(43) Date of publication:
**05.03.2025 Bulletin 2025/10**

(21) Application number: **23306431.0**

(22) Date of filing: **30.08.2023**

(51) International Patent Classification (IPC):
$H01M\ 4/04^{(2006.01)}$    $H01M\ 4/13^{(2010.01)}$
$H01M\ 4/505^{(2010.01)}$    $H01M\ 4/525^{(2010.01)}$
$H01M\ 4/62^{(2006.01)}$    $C01B\ 32/174^{(2017.01)}$

(52) Cooperative Patent Classification (CPC):
**C01B 32/174; H01M 4/0404; H01M 4/13;**
**H01M 4/505; H01M 4/525; H01M 4/62;**
**H01M 4/621; H01M 4/625;** C01P 2004/61;
C01P 2006/12; C01P 2006/19; C01P 2006/22;
H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ImerTech**
**75015 Paris (FR)**

(72) Inventors:
• **FERRARESI, Giulio**
  **7013 Domat/Ems (CH)**

• **RODLERT BACILIERI, Marlene**
  **6932 Breganzona (CH)**
• **GULAS, Michal**
  **6713 Malvaglia (CH)**
• **WANG, Xu**
  **Setagaya-ku**
  **Tokyo 158-0097 (JP)**

(74) Representative: **Eder, Michael**
**df-mp Dörries Frank-Molnia & Pohlman**
**Patentanwälte Rechtsanwälte PartG mbB**
**Theatinerstrasse 16**
**80333 München (DE)**

(54) **DISPERSIONS OF CARBON NANOTUBES AND CARBON BLACKS**

(57) The present invention relates to conductive dispersions possessing advantageous properties comprising carbon black and carbon nanotube particles with carefully selected properties, such as surface area, oil absorption number (OAN), ration of cOAN/OAN, number of primary particles per aggregate, $D_{50}$ length, or outside diameter. Optimized dispersions according to the invention are characterized by improved stability and suitable rheological properties and enable the formation of improved Li-Ion batteries

**EP 4 517 851 A1**

**Description**

## FIELD OF THE DISCLOSURE

The present disclosure relates to stable dispersions comprising carbon nanotube and carbon black particles in a dispersing media with advantageous stability and rheological properties. In this disclosure, guidelines for selecting suitable carbon black and carbon nanotube particles for achieving stable dispersion with improved rheological characteristics are provided. The carbon blacks may, for example, be selected based on their respective Braun-Emmett-Teller theory specific surface area (BET SSA), their oil absorption number (OAN), their compressed oil absorption number (cOAN), their ratio of cOAN/OAN, their primary particles per aggregate, and/or their degree of branching. The carbon nanotubes may, for example, be selected based on their respective BET SSA, nanotube length, and outer diameter. Such advantageous dispersions of carbon black and carbon nanotube particles can be used in a variety of applications such as lithium ion battery manufacture.

Also provided herein are cathode slurries, cathodes, and Li-ion batteries comprising, or formed with, the stable dispersion as conductive additive. Further, a method of obtaining stable and advantageous dispersions from mixtures of carbon blacks and carbon nanotubes is disclosed.

## BACKGROUND

Carbon nanotubes (CNTs) are a type of one dimensional conductive carbon structure. Carbon nanotubes display desirable physical properties, such as high mechanical strength and high conductivity. Generally, carbon nanotubes are commercially mostly sold in the form of dispersions and have diameters ranging from 2 nm to about 50 nm and lengths ranging from a few to a few tens of micrometers. Currently, the largest field of application for carbon nanotube is the application of CNTs as conductive additive in, for example, lithium ion (Li-Ion) battery electrodes.

However, due to their high specific surface energies and other surface properties, carbon nanotubes are generally prone to agglomeration and thus tend to display unfavorable dispersion characteristics. Currently, high-energy ball milling and dispersing agents are required to be able to obtain CNT dispersions with passable stability. Moreover, the viscosity of CNT dispersions generally has to be adjusted to allow for sufficient workability and subsequent applicability in industrial applications.

To achieve the required viscosities and dispersion stability, the solid content of CNT dispersions is generally adjusted with added organic additives. Conductive carbon blacks, an isotropic conductive carbon material also used in lithium ion batteries, can be used to increase the dispersibility of carbon nanotubes while resulting in beneficial effects on dispersion viscosity and stability. Stable and easy-to-handle dispersions are highly desired during the manufacture of Li-Ion batteries in industry.

The combination of conductive carbon blacks and carbon nanotubes in dispersions as conductive additives has now been found to not only display favorable dispersion characteristics but also to result in improved battery performance. Due to dispersions combining carbon black and carbon nanotubes resulting in improved convenience and workability of electrode slurries during manufacture, such dispersions enable the production of higher quality electrodes for lithium ion batteries. However, due to the versatile nature of carbon blacks, the rheological behavior of resulting dispersions will be greatly affected by the properties of the employed carbon black particles when producing mixed dispersions. Thus, careful selection of suitable carbon black and carbon nanotube particles is required to obtain optimized dispersions and easy-to-handle electrode slurries for application in lithium ion batteries.

For example, the patent application CN 106711453 A describes a conductive carbon slurry as cathode material comprising both carbon nanotubes and conductive carbon black. Similarly, CN 104766978 B discloses a method for preparing a conductive carbon paste comprising carbon nanotubes, carbon black, and a binder in a specific ratio. Meanwhile, CN 104868125 B describes a method for preparing a carbon nanotube and carbon black dispersion by milling carbon nanotubes in a zirconium bead mill prior to dispersing with a carbon black.

In light of the above, there is a need for optimized dispersions comprising carbon black and carbon nanotubes that tune rheological parameters like viscosity and yield stress with dispersion stability, while maximizing carbon loading. Thus, it is an object of the invention to identify specific parameters of carbon blacks and carbon nanotubes that enable the formulation of favorable dispersions that are characterized by a high total amount of carbonaceous particulate material, while at the same time having acceptable viscosity, good dispersion stability, and displaying favorable dampening behavior.

## SUMMARY OF THE INVENTION

The present inventors have surprisingly found that the rheological behaviors of dispersions comprising both carbon black and carbon nanotubes are greatly influenced by careful selection of appropriate carbon blacks based on certain physical parameters. Thus, the current invention gives access to stable dispersions tailored to desired range of viscosity while also displaying a comparatively high concentration of carbon nanotube and conductive carbon black particles. Herein, the dispersions according to the invention display enhanced process feasibility and stability characteristics, which are of special interest for use as conductive additive in the manufacture of Li-Ion batteries (LIB).

Hence, the current inventors have found that carefully selected combinations of carbon black (CB) and carbon nanotube (CNT) particles and tuning their respective ratios gives access to dispersions that do not only greatly increase convenience during production, but also enable the manufacture of higher quality electrodes with improved characteristics, thus further advancing battery technology.

Accordingly, in a first aspect, the present invention relates to a dispersion comprising carbon black (CB) particles, wherein the carbon black particles are characterized by a BET SSA of about 40 $m^2$/g to about 650 $m^2$/g, an oil absorption number (OAN) of about 230 mL/100 g to about 400 mL/100 g, an compressed oil absorption number (cOAN) to OAN ratio (cOAN/OAN) of about 0.2 to about 0.85, and less than about 235 primary particles per aggregate. Further, the dispersion according to the first aspect comprises carbon nanotube (CNT) particles, wherein the carbon nanotube particles are characterized by an outside diameter of about 9 nm to about 18 nm, and a $D_{50}$ length of about 1 $\mu$m to about 13 $\mu$m. An inventive dispersion as described above comprises a dispersing media, and the carbon black and carbon nanotubes particles are present in a weight ratio of CNT to CB particles of about 10:1 to about 1:1.

In a second aspect, the present invention relates to a cathode slurry composition comprising the dispersion according to the first aspect of the invention, an active lithium material, the dispersing media, and a binder.

Further, in a third aspect of the invention, a cathode produced by applying the electrode slurry of the second aspect of the invention to a substrate and subsequently drying the coated substrate at a temperature of at least 100 °C for 5 minutes is described.

Moreover, in a fourth aspect of the invention, the invention describes lithium ion (Li-Ion) batteries using the dispersion according to the first aspect of the invention during manufacture. Further, such batteries comprise a cathode according to the third aspect of the invention and display improved properties, such as for example direct contact resistance, discharge rate, and/or capacity retention after prolonged storage.

In the fifth and final aspect of the invention relates to a method of forming a stable dispersion comprising CNT and CB particles in a ratio of about 10:1 (w/w) to about 1:1 (w/w) is described. In the first step of said method, a dispersant is dispersed in a dispersing media. Then, carbon black particles are added to the mixture of dispersing media/dispersant, wherein the carbon black particles to be used in the method are characterized by a BET SSA of about 40 $m^2$/g to about 650 $m^2$/g, an oil absorption number (OAN) of about 230 mL/100 g to about 400 mL/100 g, an compressed oil absorption number (cOAN) to OAN ratio (cOAN/OAN) of about 0.2 to about 0.85, and less than about 235 primary particles per aggregate. In a third step, carbon nanotube particles are added to the resulting mixture, wherein the CNT particles to be used in the method are characterized by an outside diameter of about 9 nm to about 18 nm, and a $D_{50}$ length of about 1 $\mu$m to about 13 $\mu$m. Finally, the mixture comprising the dispersing media/dispersant/CB particles/CNT particles is processed in a mill until a dispersion is obtained. Optionally, a dispersion obtained by the method of the fifth aspect of the invention is characterized by a total amount of carbonaceous particulate material (referring to the sum of CB and CNT particles) between about 1.5 wt% to about 10 wt% in relation to the total weight of the final dispersion, a viscosity of about 1.0 Pa*s to about 6.8 Pa*s at a shear rate of 1 Hz when tested by a modular compact rheometer, and/or a yield stress, as defined as the cross-over point of G' and G", of at least about 1.0 Pa and at most 26.0 Pa.

## BRIEF DESCRIPTION OF THE DRAWINGS

The present disclosure will be more readily appreciated by reference to the following detailed description when being considered in connection with the accompanying drawings:

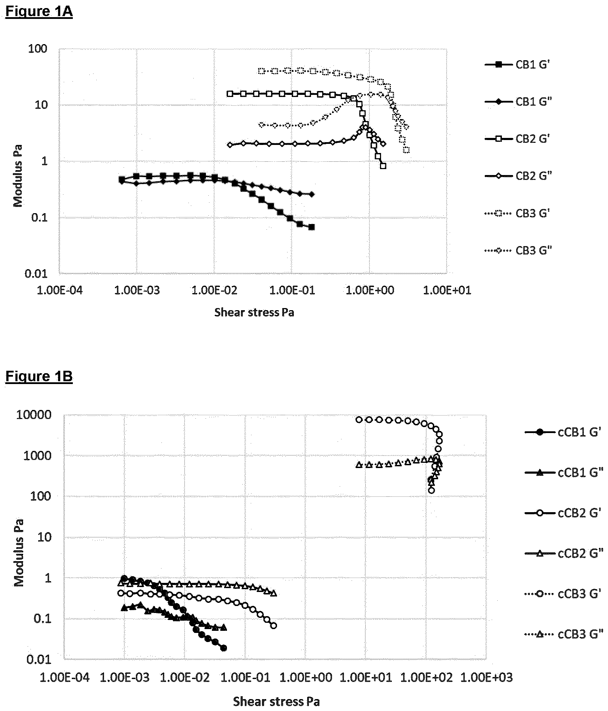

Figure 1A depicts the DMA analyses of CB dispersions CB 1 to CB 3 containing various carbon blacks and no CNTs. Figure 1B depicts the DMA analyses of comparative cCB dispersions cCB1 to cCB3 containing various carbon blacks and no CNTs. The storage modulus G' and the loss modulus G" of each dispersion are plotted against the applied shear stress.

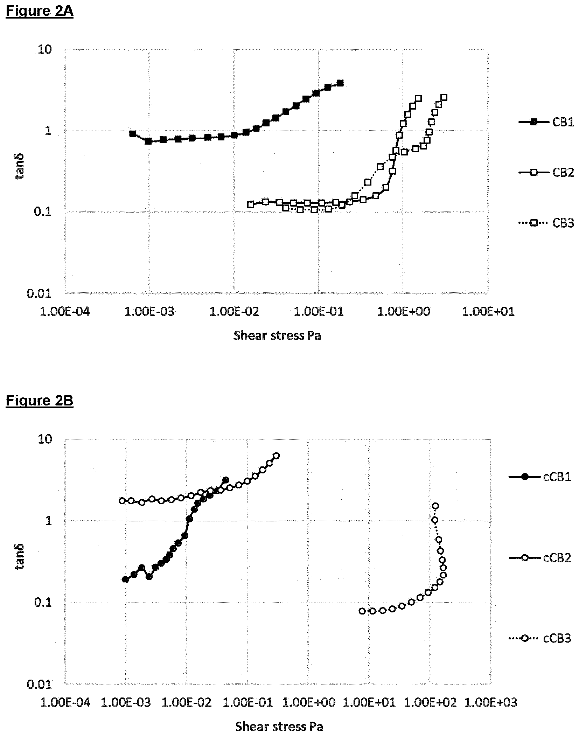

Figure 2A depicts the tan($\delta$) of CB dispersions CB 1 to CB 3 containing various carbon blacks and no CNTs. Figure 2B depicts the tan($\delta$) of comparative CB dispersions cCB 1 to cCB 3 containing various carbon blacks and no CNTs. The loss factor tan($\delta$) of each dispersion is plotted against the applied shear stress.

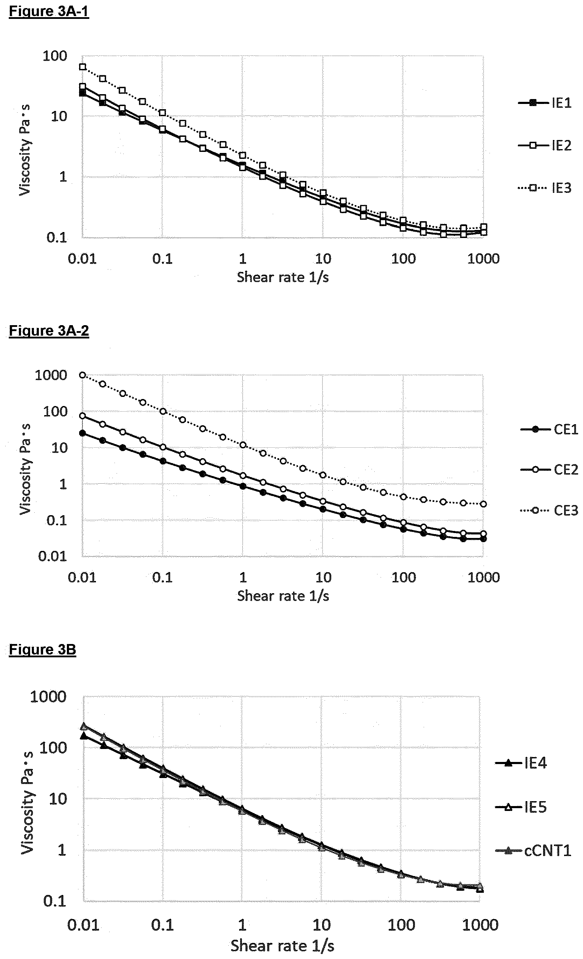

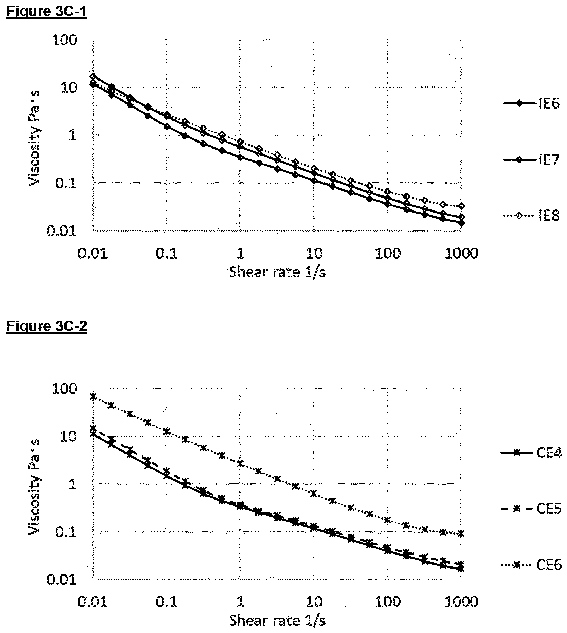

Figure 3A-1 depicts the rheological properties of inventive dispersions IE1 to IE3, which are blends of various carbon blacks and CNT 1, with a CNT solid content of 4.1 wt%. Figure 3A-2 depicts the rheological properties of comparative dispersions CE 1 to CE 3, which are blends of various comparative carbon blacks and CNT 1 with a CNT solid content of 4 to 4.1 wt%. Figure 3B depicts the rheological properties of inventive dispersions IE 4 and IE 5, which are blends of various carbon blacks according to the invention and CNT 1, with a CNT solid content of 5 wt%, and a comparative CNT dispersion cCNT 1 which includes only CNT 1 and no carbon black and at a CNT solids content of 5 wt%. Figure 3C-1 depicts the rheological properties of inventive dispersions IE 6 to IE 8, which are blends of various carbon blacks according to the invention and CNT 2 with a CNT solid content of 2.5 wt%. Figure 3C-2 depicts the rheological properties of comparative dispersions CE 4 to CE 6, which are blends of various comparative carbon blacks and CNT 2 with a CNT solid content of 2.5 wt%. The viscosity of each dispersion is plotted against the applied shear rate.

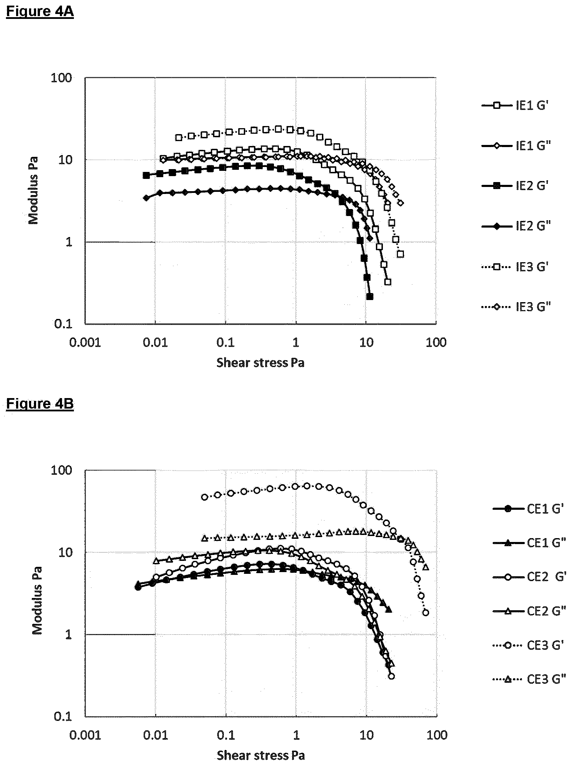

Figure 4A depicts the DMA analyses of dispersions IE 1 to IE 3 with a CNT solid content of 4.1 wt%. Figure 4B depicts the DMA analyses of dispersions CE 1 to CE 3 with a CNT solid content of 4 to 4.1 wt%. The storage modulus G' and the loss modulus G" of each dispersion are plotted against the applied shear stress.

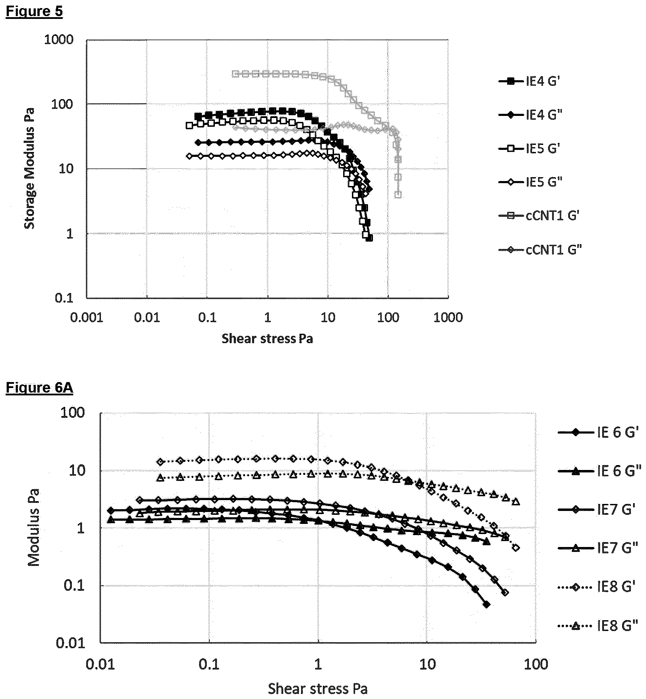

Figure 5 depicts the DMA analyses of dispersions IE 4 and IE 5 and CNT dispersion cCNT1, each with a CNT solid content of 5 wt%. The storage modulus G' and the loss modulus G" of each dispersion are plotted against the applied shear stress.

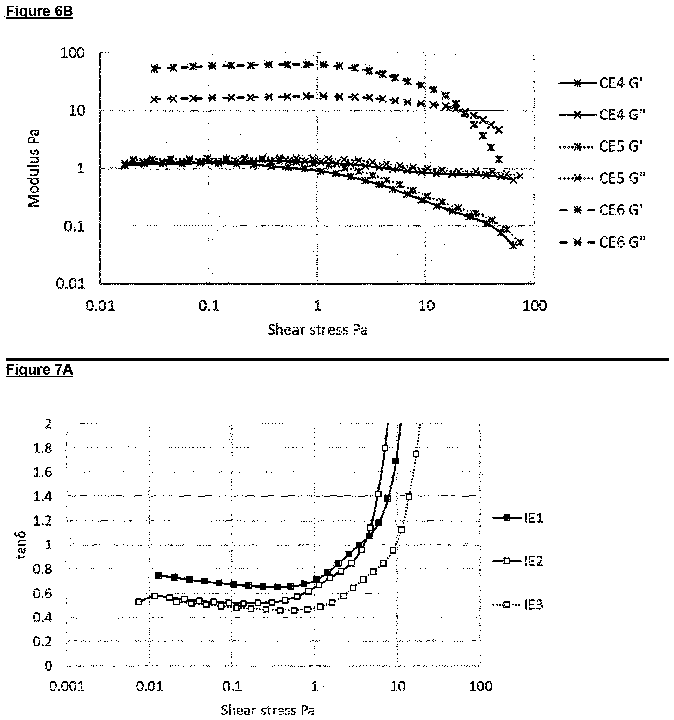

Figure 6A depicts the DMA analyses of dispersions IE 6 to IE 8 with a CNT solid content of 2.5 wt%. Figure 6B depicts the DMA analyses of dispersions CE 4 to CE 6 with a CNT solid content of 2.5 wt%. The storage modulus G' and the loss modulus G" of each dispersion are plotted against the applied shear stress.

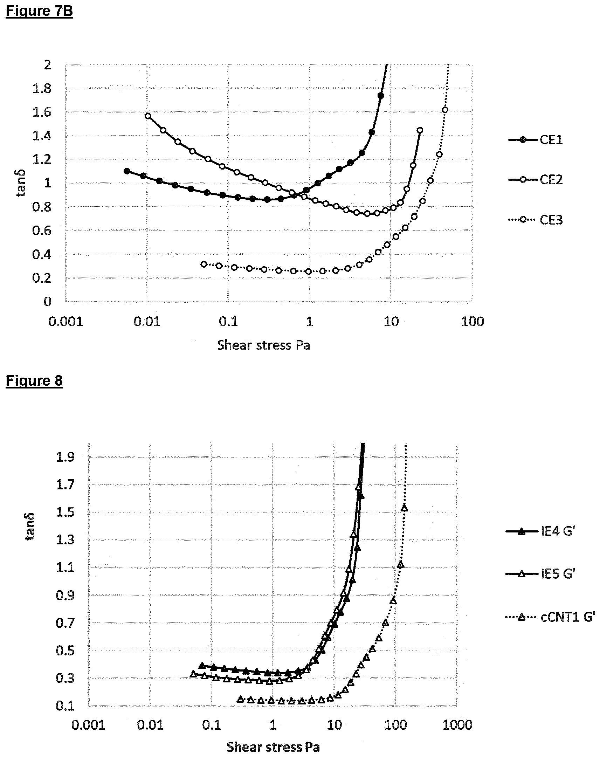

Figure 7A depicts the $\tan(\delta)$ of dispersions IE 1 to IE 3 with a CNT solid content of 4.1 wt%. Figure 7B depicts the $\tan(\delta)$ of dispersions CE 1 to CE 3 with a CNT solid content of 4 to 4.1 wt%. The loss factor $\tan(\delta)$ of each dispersion is plotted against the applied shear stress.

Figure 8 depicts the $\tan(\delta)$ of dispersions IE4 and IE5 and CNT dispersion cCNT 1, each with a CNT solid content of 5 wt%. The loss factor $\tan(\delta)$ of each dispersion is plotted against the applied shear stress. The loss factor $\tan(\delta)$ of each dispersion is plotted against the applied shear stress.

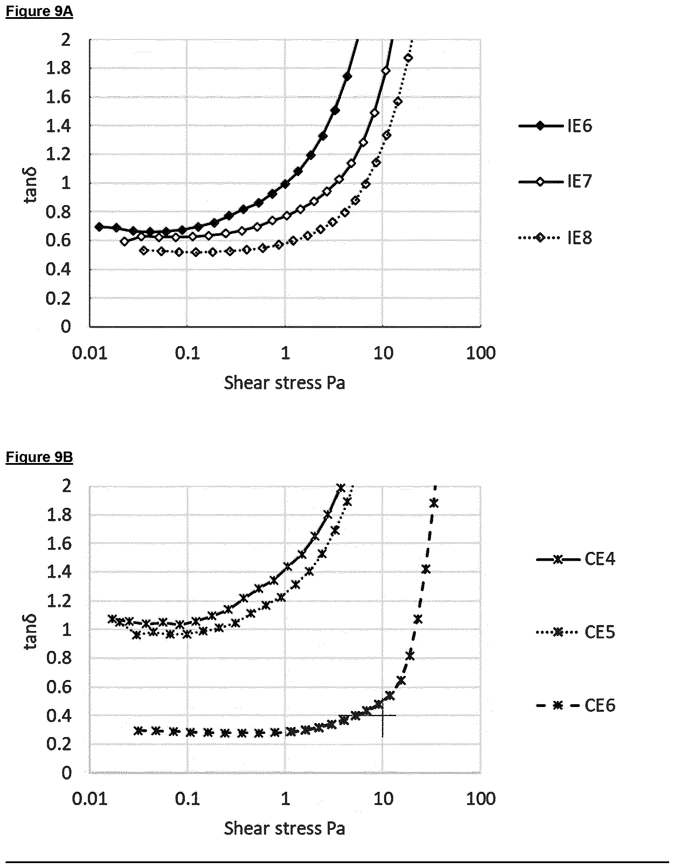

Figure 9A depicts the $\tan(\delta)$ of dispersions IE 6 to IE 8 with a CNT solid content of 2.5 wt%. Figure 9B depicts the $\tan(\delta)$ of dispersions CE 4 to CE 6 with a CNT solid content of 2.5 wt%. The loss factor $\tan(\delta)$ of each dispersion is plotted against the applied shear stress.

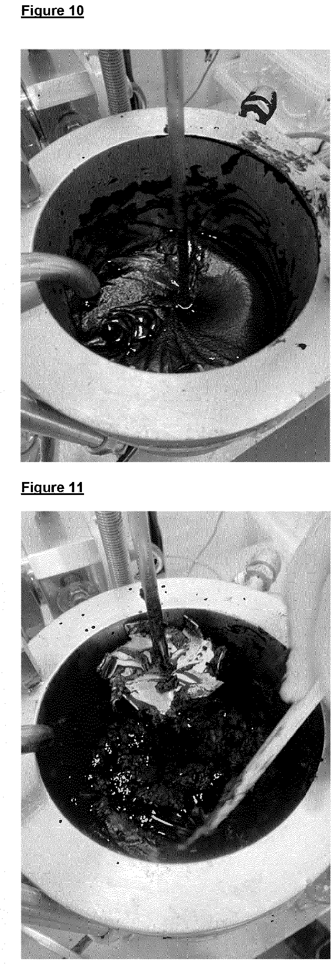

Figure 10 demonstrates a dispersion according to the invention with a workable viscosity.

Figure 11 depicts the paste resulting from the preparation of CE 7 with CNT 3. The thick paste was unsuitable for further testing.

## DETAILED DESCRIPTION

The present inventors have surprisingly found that the careful selection of carbon black and carbon nanotube particles according to various parameters not only has a profound positive effect on the rheological properties of the resulting dispersions comprising the carbonaceous particulate material, but also increase the stability of the dispersion they are comprised in, as determined by, for example, the yield stress and the course of the $\tan(\delta)$ curve over a range of applied shear stresses. As described above, carbon nanotube particles impart favorable conductivity properties to Li-Ion electrodes comprising them. However, CNT particle dispersions are also generally prone to agglomeration and tend to display unfavorable dispersion characteristics due to their high specific surface energies and other surface properties, which subsequently leads to lower quality Li-Ion electrodes.

Dispersions comprising a mixture of both CB and CNT particles, able to mitigate some of the difficulties encountered by CNT dispersions, have been reported in Literature. However, the current inventors have surprisingly discovered that dispersions comprising carefully selected combinations of CB and CNT particles display not only especially favorable stability and viscosity characteristics, but also show improved performance when used as conductive additive. Hence, such improved dispersions not only greatly increase the convenience during handling and processing, but also enable to production of higher-quality Li-Ion cathodes, subsequently resulting in the manufacture of improved Li-Ion batteries.

## CB and CNT Dispersions of the Present Disclosure and Downstream Products

As summarized in the first aspect the invention, the present invention relates to a dispersion comprising carbon black (CB) particles, wherein the carbon black particles are characterized by an Braun-Emmett-Teller theory specific surface area (BET SSA) of about 40 $m^2/g$ to about 650 $m^2/g$, an oil absorption number (OAN) of about 230 mL/100 g to about 400 mL/100 g, an compressed oil absorption number (cOAN) to OAN ratio (cOAN/OAN) of about 0.2 to about 0.85, and less than about 235 primary particles per aggregate. Further, the dispersion comprises carbon nanotube (CNT) particles, wherein the carbon nanotube particles are characterized by an outside diameter of about 9 nm to about 18 nm, and a $D_{50}$ length of about 1 $\mu$m to about 13 $\mu$m. A dispersion as described above will also comprise a dispersing media, and be characterized in that the carbon black particles and carbon nanotubes will be present in ratio of CNT to CB of about 10:1 to about 1:1 to each other. As appreciated by the person skilled in the art, a higher ratio of CNT particles will lead to favorable conductivity characteristics, while a higher ratio of CB will generally result in improved dispersion characteristics.

Hence, the carbon black particles are, among other parameters, characterized by their respective Braun-Emmett-Teller specific surface area (BET SSA). A higher BET SSA of the CB particles generally correlates with an increase in surface energy, a higher conductivity of the CB powders, and a higher area of interaction between the surfaces of the particles, as well as between the particle surfaces and a dispersing media. Therefore, it is generally understood that the BET SSA of carbon black particles will have a profound influence on the parameters of the resulting dispersion. Accordingly, in certain embodiments of the first aspect the carbon black particles according to the invention may also be characterized by a BET SSA of about 40 $m^2/g$ to about 650 $m^2/g$, optionally by a BET SSA of about 50 $m^2/g$ to about 630 $m^2/g$, or 60 $m^2/g$ to about 610 $m^2/g$.

The dispersion comprises CB particles that are characterized by an oil absorption number (OAN). The OAN is a measure of the ability of a carbon black particle to absorb liquids and is a macroscopic parameter influenced by a variety of (micro-/-nanoscopic) structural characteristics of the carbon black. In certain embodiments, the CB particles for use in the invention may also be characterized by an OAN of about 240 mL/100 g to about 380 mL/100 g, optionally by an OAN of about 230 mL/100 g to about 400 mL/100 g, of about 250 mL/100 g to about 360 mL/100 g, or of about 260 mL/100 g to about 340 mL/100 g.

Further, the CB particles may also be characterized by a "compressed" oil absorption number (cOAN), describing a function of the structure of the carbon black particles after a compression step. The CB particles to be used in the invention may in some embodiments be further characterized by cOAN of about 80 mL/100 g to about 270 mL/100 g, optionally the CB particles may be characterized by an cOAN of about 90 mL/100 g to about 260 mL/100 g, of about 100 mL/100 g to about 250 mL/100 g, or of about 110 mL/100 g to about 240 mL/100 g.

Moreover, the CB particles to be used in the dispersions according to the invention are characterized by their ratio of cOAN to OAN (cOAN/OAN). The difference between the initial OAN value and the cOAN value of the compressed sample is a parameter that reflects the resilience of the carbon black structure to compressive forces. The CB particles may also be characterized by a cOAN/OAN ratio of about 0.2 to about 0.85, optionally by a of cOAN/OAN ratio of about 0.25 to about 0.825, of about 0.3 to about 0.8, or of about 0.35 to about 0.775. Alternatively, the ratio of cOAN to OAN of the CB particles is less than about 0.77.

The CB particles to be used within the inventive dispersion are characterized by the number of primary particles contained per aggregate. The term "primary particles per aggregate" refers to the arrangement of individual carbon black particles within larger clusters or aggregates. The primary particles are the smallest discrete units of carbon black, while aggregates are formed when these primary particles come together, generally due to covalent bonds between the primary particles to form such aggregates made up of primary particles. These aggregates can then form agglomerates through inter-particle forces. Generally, and without wishing to be bound by theory, a lower amount of aggregates can indicate lower inter-particle forces. This can have knock-on effects on the macroscopic parameters of CB particles, such as dispersibility or stability in dispersion. The CB particles to be used in the invention may suitably be characterized by less than about 235 primary particles per aggregate, optionally wherein the CB particles are characterized by less than about 220 primary particles, less than about 200, or less than about 180 primary particles per aggregate.

In some embodiments, the CB particles comprised in the dispersions may also be characterized by their respective degree of branching. As apparent from the name, the degree of branching refers to the branching or branching complexity of the carbon black particles' internal structural morphology. Without wishing to be bound by theory, a higher degree of branching generally results in a more branched internal morphology, which can influence factors such as, for example, BET SSA, porosity, and the ability of CB particles to form stable dispersions. The CB particles may have a degree of branching of about 7 to about 18, optionally a degree of branching of about 8 to about 17, or even 9 to 16. Alternatively, the CB particles may be characterized by a degree of branching of lower than 16.

Additional or alternatively, the CB particles may in certain embodiments be further defined by their respective Scott density. The parameter Scott density refers to the density or mass per unit volume of the CB particles. The Scott density of CB particles comprised in the inventive dispersions may vary from about 0.01 $g/cm^3$ to about 0.1 $g/cm^3$, optionally wherein the CB particles are characterized by a Scott density of about 0.02 $g/cm^3$ to about 0.09 $g/cm^3$, of about 0.03 $g/cm^3$ to about 0.08 $g/cm^3$, of about 0.04 $g/cm^3$ to about 0.7 $g/cm^3$, or of about 0.045 $g/cm^3$ to about 0.065 $g/cm^3$.

In specific embodiments according to the invention, the CB particles may be selected from thermal black, acetylene black, or furnace black, which are different types of amorphous carbon black, obtained by incomplete combustion or thermal decomposition of hydrocarbons. Optionally, the thermal black, acetylene black, or furnace blacks suitable for the invention may be Li-Ion battery grade carbon blacks obtained from commercial sources, or they may be synthesized from hydrocarbon starting materials. Lithium ion battery grade carbon blacks typically have OAN values in the ranges as provided herein to provide sufficient electrical conductivity. Carbon blacks with OAN values below the ranges described herein do not offer sufficient conductivity.

In particular embodiments, the carbon black particles to be used in the dispersion according to the invention are prepared from hydrocarbons with high degree of aromaticity. The process for the preparation of the CB particles to be used herein comprises a thermal-oxidative decomposition by feeding hydrocarbons with high degree of aromaticity (preferably liquid or gaseous), such as coal tar oil, ethylene tar, cat cracker oil, natural gas, heavy fractions of petrochemical distillation residues, or mixtures of any of these materials together with sub-stoichiometric amounts of air and/or steam into a reactor, thereby causing the decomposition of the gasified hydrocarbons at a temperature of between about 1000°C and about 1600°C, for instance from 1400 and 1500 °C or from 1450 to 1550°C, and forming the carbon black materials in the presence of oxidative species such as $O_2$, $CO_2$, $H_2O$, or mixtures thereof.

The reaction time in the reactor is typically from less than a second up to a few seconds, though it will be appreciated that the exact conditions depend on the carbon source and the reactor employed for the generation of the carbon black material.

The current inventors have found carbon black particles to have a significant impact on the overall rheological properties of the resulting dispersions according to the invention, despite the lower quantity of CB particles present in the final dispersion relative to the CNT particles. However, the inventors have discovered that to obtain dispersions according to the invention also a careful selection of CNT particles according to defined parameters is required alongside the selection of CB particles.

Accordingly, carbon nanotube particles to be used in the inventive dispersions are selected by their respective outside diameter. The outside diameter refers to the width or diameter of the outermost layer of a nanotube structure. In some embodiments the first aspect of the invention the CNT particles to be used in the invention may be characterized by an outside diameter of about 9 nm to about 18 nm, optionally wherein the CNT particles are characterized by an outside diameter of about 10 nm to about 16 nm.

The CNT particles to be used in dispersions according to the invention are also characterized by their $D_{50}$ length. As known to the skilled person, the $D_{50}$ length refers to the median length of the CNT particles within the dispersion, and is generally accompanied by $D_{10}$ and $D_{90}$ length distribution measurements. Hereby, $D_{10}$ length refers the nanotube length at which 10% of the CNT particles in a given sample have a length equal to or less than that value, similar to the $D_{90}$ length, at which 90% of the CNT particles in a given sample have a length equal to or less than that value. Outside diameter and $D_{50}$ can influence factors such as electrical conductivity, mechanical strength, BET SSA of CNT particles, as well as their interactions of with other materials. Alongside the first aspect of the invention, the CNT particles to be used in the invention may also be characterized by a $D_{50}$ length of about 1 $\mu$m to about 13 $\mu$m, optionally wherein the CNT particles are characterized by a $D_{50}$ length from about 2 $\mu$m to about 11 $\mu$m, or from about 3 $\mu$m to about 10 $\mu$m, or from about 9 $\mu$m to about 13 $\mu$m.

In certain embodiments according to the invention, at least a portion of the CNT particles to be used in the inventive dispersion may be multi-walled. Multi-walled CNTs consist of concentric cylinders of carbon atoms, resembling tubes within tubes, thereby forming carbon nanotubes with multiple layers of carbon atoms. In a particular embodiment, essentially all CNT particles are multi-walled.

In further embodiments, the dispersing media comprised in the dispersion may be selected from the group of organic solvents. Organic solvents are generally liquid at room temperature and are primarily composed of carbon and hydrogen atoms, but may also contain other atoms such as nitrogen, oxygen, or halogen atoms. Common examples for organic solvents include alcohols (such as ethanol and methanol), ketones (such as acetone and methyl ethyl ketone), ethers (such as diethyl ether and tetrahydrofuran), aromatic solvents (such as toluene and xylene), amide-based solvents (such as DMF or NMP), chlorinated solvents (such as DCM and chloroform), and hydrocarbons (such as hexane and heptane). Optionally, the organic solvent to be used as dispersing media is an amide-based solvent. In specific preferred embodiments, the dispersing media to be used in the dispersion is N-Methyl-2-pyrrolidone (NMP).

The dispersing media according to the invention is in some embodiments characterized in that it may further contain a dispersing agent. Dispersing agents are compounds that assist in the dispersion and stabilization of the CB and CNT particles within the dispersing media. The incorporation of a dispersing agent in the dispersion enhances the dispersibility of CB and CNT particles in the dispersing media, as well as having a positive effect on the stability of the resulting dispersion by preventing or slowing particle agglomeration. It is generally accepted that a dispersing agent allows for better control over the dispersion process of CB and CNT particles. Suitably, the dispersing agent to be used in dispersions according to the invention may be an organic dispersing agent. Optionally, the dispersing agent may be a polymeric organic dispersing agent. In a particular embodiment of the invention, the dispersing agent is Polyvinylpyrrolidone (PVP).

In such embodiments, careful consideration should be given not only to the selection, but also to the concentration of the dispersing agents to achieve optimal dispersion stability and rheological behavior of the inventive dispersion comprising both CB and CNT particles. Accordingly, in certain embodiments the dispersing media comprises the dispersing agent in an amount less than about 2 wt%, optionally wherein the dispersing agent is comprised in the dispersing media in an amount less than about 1.8 wt%, or less than about 1.6 wt%, or less than about 1.4 wt%, or less than about 1.2 wt%, or less than about 1.0 wt%.

Furthermore, the dispersion according the first aspect of the invention may also be defined by their rheological properties and/or by the total amount of carbon black (as in: CB + CNT) particles per weight comprised in the dispersion. The rheological properties of the dispersion according to the invention such as viscosity, yield stress, storage modulus, loss modulus, or loss factor are generally obtained by oscillatory measurements. In an oscillatory measurement the material is subjected to a sinusoidal stress or strain and the strain or stress response of the dispersion is measured. The dynamic mechanical analysis (DMA) analyzes both elastic and viscous material response simultaneously. In this type of experiment, a motor is used to either apply a sinusoidal strain or stress to a material (in tension, bending, or shear), while the resulting stress is measured with a force transducer or the resulting strain is measured with a position sensor.

In an oscillatory experiment as employed to determine the rheological parameters of the dispersions according to the invention, the phase shift is used to separate the measured stress into a component in phase and to determine the elastic or storage modulus (G') of a material, defined as the ratio of the elastic (in-phase) stress to strain. The storage modulus relates to the material's ability to store energy elastically. Similarly, the loss modulus (G") of a material is the ratio of the viscous (out of phase) component to the stress, and is related to the material's ability to dissipate stress through heat. The storage modulus G' gives information about the amount of structure present in a material. It represents the energy stored in the *elastic* (as in: non-liquid) structure of the sample. If it is higher than the loss modulus the material can be regarded as mainly elastic. The loss modulus G" represents the *viscous* (as in liquid) part or the amount of energy dissipated in the sample.

The loss factor tan($\delta$), which measures the dispersions' damping behavior (resistance to disturbance), is calculated as G"/G' over a certain sheer stress range and can determine the upper bond of a dispersions strain-stress stability. When the loss factor is close to 0, a material can be regarded as mainly elastic, while materials with a tan($\delta$) value between 0 and 1 typically exhibit viscoelastic behavior, with both elastic and viscous effects present. The tan($\delta$) value is dimensionless and varies over a range of applied shear stresses. The "starting point", as in the first measurable point from which G', G" and the tan($\delta$) value can be measured, also varies and is specific for each dispersion. It was observed that for dispersions with a tan($\delta$) (first value) > 1 the dispersion was not stable. For the dispersions the tan($\delta$) values reported herein (see Tables 2, 4, 6) are averaged from the first measurable data point tan($\delta$) (first value) to the data point tan($\delta$) (first value + 0.05 Pa) to account for shifts within the first few reported tan($\delta$) values. The complete tan($\delta$) graphs are reported as Figures 2A, 2B, 7A, 7B, 8, 9A, and 9B.

In particular embodiments of the invention, the dispersion characterized in that it has a total amount of CB and CNT particles of between about 1.5 wt% to about 10 wt%, a viscosity of about 1.0 Pa*s to about 6.8 Pa*s at a shear rate of 1 Hz when tested by a modular compact rheometer, and/or a yield stress, defined as the cross-over point of storage modulus G' and loss modulus G" of at least about 1.0 Pa and at most 26.0 Pa.

Generally, the described dispersions may be defined by the total amount of carbonaceous particulate material (understood as the amount of CB + CNT particles per weight). It is considered obvious that the amount of particulate material in the dispersion has significant impact on characteristics of said dispersion, wherein higher CB and CNT particle loadings tend to lead to higher viscosities and decreased workability. Generally, it is considered desirable for dispersions for use as conductive additive to have the highest CB and CNT particle loading possible, while still displaying at least a workable viscosity (considered to be acceptable between about 0.1 Pa*s and 8.0 Pa*s) and good dispersion stability. The total amount of CB and CNT particles within the inventive dispersion may in some embodiments be from about 2 wt% to about 9 wt%. Optionally, the total amount of CB and CNT particles in the dispersion may from about 2.5 wt% to about 8 wt%, or from of about 3 wt% to about 7 wt%, or of from about 3.5 wt% to about 6 wt%.

The selection of CB and CNT particles, as well as their total amount and their respective amount to each other (CNT:CB ratio of about 10:1 to about 1:1 respective to their weight) will have profound influence on the viscosity of the resulting dispersion. Hence, in some embodiments, the dispersion may be defined by its viscosity, which describes the resistance to flow exhibited by the dispersion. In such embodiments, the viscosity of the dispersion is measured using a modular compact rheometer at the measurement value is taken a shear rate of 1 Hz. Therein, the dispersion may be characterized by a viscosity of about 1.2 Pa*s to about 6.6 Pa*s at a shear rate of 1 Hz. Optionally, the dispersion may be characterized by a viscosity of about 1.4 Pa*s to about 6.4 Pa*s at a shear rate of 1 Hz.

A dispersion comprising CB and CNT particles according to the invention may also be defined by its yield stress, which is defined by the cross-over point of storage modulus G' and loss modulus G". Storage and loss moduli are obtained by oscillatory measurements as described above by a modular compact rheometer. A lower yield stress implies that the dispersion flows and deforms more readily under an applied stress, which tends to be beneficial in applications of interest where ease of processing, flowability and workability are desired. Hence, within several embodiments the inventive dispersion may be defined by a yield stress of at least about 1.2 Pa and at most about 24.0 Pa. Alternatively, the dispersion may be characterized by a yield stress of at least about 1.5 Pa to at most about 22.0 Pa.

Further, in some embodiments the dispersions may also be characterized by the course of their storage modulus G' and loss modulus G" over a range of applied shear stresses (in Pa). For example, the dispersion may be characterized by a loss modulus (G") ranging from about 0.5 Pa to about 50 Pa and a storage modulus (G') ranging from about 0.5 Pa to about 150 Pa at a shear stress range of about 0.001 Pa to about 2 Pa when tested by a modular compact rheometer. The dispersions may also be characterized by a loss modulus (G") ranging from about 1 Pa to about 45 Pa and a storage modulus (G') ranging from about 1 Pa to about 140 Pa, or a loss modulus (G") ranging from about 2 Pa to about 40 Pa and a storage modulus (G') ranging from about 2 Pa to about 130 Pa at a shear stress range of about 0.001 Pa to about 2 Pa when tested by a modular compact rheometer.

Finally, the dispersion may additionally or alternatively be defined by its respective loss factor tan($\delta$). The loss factor is a parameter that can suitably indicate the energy dissipation and viscosity of the dispersion under applied shear stress. Hereby, a high(er) loss factor indicates a higher degree of energy dissipation and viscosity in the dispersion under an applied range of shear stresses, while a lower loss factor indicates a lower level of energy dissipation and viscosity under shear stress. This can be beneficial in applications where controlled or inhibited flow, high stability, and reduced settling are desired. Conversely, a low(er) tan($\delta$) signifies improved flowability and reduced resistance to deformation, which are desirable in applications where ease of processing and enhanced workability are desired. Therefore, dispersions for use as conductive additive ideally display an intermediate (such as about 0.35 to about 0.85) tan($\delta$) value as trade-off between dispersion viscosity and stability as well as a tan($\delta$) value that is mostly constant over a as wide a range of shear stresses as possible. As such, in some embodiments according to the current invention the dispersion may be characterized by a loss factor tan($\delta$) of about 0.35 to about 0.85 at a shear stress range of 0.1 Pa at a shear stress of about 0.001 Pa to about 2 Pa when tested by a modular compact rheometer. Further, the inventive dispersion may also be characterized by a loss factor tan($\delta$) of from about 0.4 to about 0.8, or of from about 0.45 to about 0.75 at a shear stress range of about 0.001 Pa to about 2 Pa when tested by a modular compact rheometer. In certain embodiments, the described loss factor tan($\delta$) ranges may be obtained in a shear stress range from about 0.05 Pa to about 1 Pa when tested by a modular compact rheometer. By controlling the loss factor within the specified ranges, the skilled person can tailor the rheological properties of the dispersion to suit various application requirements.

Accordingly, the second aspect of the present invention refers to a cathode slurry composition comprising the dispersion as described above, an active lithium material, a binder, and a dispersing media. In preferred embodiments of this aspects, the dispersion, the active lithium material, and the binder are mixed homogeneously within the dispersing media. In a specific embodiment the weight ratio of active lithium material: the carbonaceous particulate material present in the dispersion : binder of the cathode slurry composition is:

95 to 97 : 0.3 to 4.0 : 0.5 to 4.0 OR

95 to 97 : 0.4 to 3.0 : 0.5 to 4.0 OR

95 to 97 : 0.5 to 2.0 : 0.5 to 4.0 OR

95 to 97 : 0.3 to 4.0 : 2.0 to 4.0 OR

95 to 97 : 0.4 to 3.0 : 2.0 to 4.0 OR

95 to 97 : 0.5 to 2.0 2.0 to 4.0.

The active lithium material forms the main part by weight of the cathode slurry material and provide the lithium ions to final Li-Ion battery. The active lithium material may be comprised in the slurry composition from about 60 wt% to about 80 wt%, or from about 65 wt% to about 75 wt% based on the weight of the final cathode slurry composition. In some embodiments the active lithium material is a lithium nickel cobalt manganese oxide.

The cathode slurry comprises a dispersing media to ensure good workability. In certain embodiments, the dispersing media is identical to the dispersing media used in the inventive dispersion. Alternatively, the dispersing media of the cathode slurry may be selected from organic solvents. Optionally, the organic solvent to be used as dispersing media is an amide-based solvent. Further optionally, the dispersing media to be used in the dispersion is N-Methyl-2-pyrrolidone (NMP).

Further, the cathode slurry comprises a binder compound. The binder may be comprised in the slurry composition from about 1 wt% to about 5 wt%, optionally from about 1.5 wt% to about 4.5 wt% based on the weight of the final slurry composition. The binder may be an organic polymer, optionally wherein the binder is polyvinylidene fluoride (PVDF).

Finally, the cathode slurry composition may be characterized by its total solid content in the slurry, wherein the total solid content comprises the lithium active material, the conductive additive, and the binder. In some embodiments, the total solid content of the cathode slurry may additionally or alternatively be about 35 wt% to about 90 wt%. The solid content may also be from about 45 wt% to about 85 wt%, or from about 55 wt% to about 80 wt%, or from about 65 wt% to about 75 wt%.

As part of the third aspect of the invention, a cathode is described, wherein the cathode is produced by applying the cathode slurry according to the second aspect on a substrate and subsequently drying the coated substrate at a temperature of at least 100 °C for at least 5 mins.

The substrate serves as structural support and conductive base for the cathode slurry applied thereon. In some embodiments the substrate is a metal foil, optionally wherein the metal foil comprises at least one metal, or an alloy, or a mixture comprising the at least one metal. Metal foils to be used in cathodes according to the invention typically have any thickness suitable for use in electrodes, generally considered to be 1 $\mu$m to 50 $\mu$m. In certain of the above described embodiments the metal, or an alloy, or a mixture comprising the at least one metal comprises aluminum, iron, zinc, nickel, copper, silver, and/or gold.

The cathode slurry as described above is applied to the substrate by any suitable means. Within some embodiments the cathode slurry is applied to the substrate by a roll-to-roll process. In some embodiments the coated substrate may be pressed to increase loading density of the coating on the cathode after the drying process.

Further, within the fourth aspect of the invention a Li-Ion battery comprising the cathode as described above is described. Such cathodes will be manufactured using a dispersion according to the first aspect of the invention as described above. Li-Ion batteries according to the invention display improved properties, such as for example improved direct contact resistance, discharge rate, and/or capacity retention after prolonged storage.

Lastly, in a fifth and final aspect of the invention, a method of manufacturing the dispersions according to the first aspect of the invention are described.

In the first step of the method, a dispersant is dispersed in a dispersing media. Both dispersant and dispersing agent are as described in the first aspect of the invention. Then, carbon black particles as described above are added to the mixture of dispersing media/dispersant in a second step. In a third step, carbon nanotube particles as defined in the first aspect of the invention are added to the resulting mixture. Finally, in a fourth step the mixture comprising the dispersing media/dispersant/CB particles/CNT particles is processed in a mill, until a dispersion is obtained. Optionally, a dispersion according to the fifth aspect of the invention may be characterized by the dispersion parameters as described above for a dispersion according to first aspect of the invention.

As such, in a particular embodiment, the second step of the method comprises adding carbon black particles characterized by a BET SSA of about 40 $m^2$/g to about 650 $m^2$/g, an oil absorption number (OAN) of about 230 mL/100 g to about 400 mL/100 g, a compressed oil absorption number (cOAN) to OAN ratio (cOAN/OAN) of about 0.2 to about 0.85, and less than about 235 primary particles per aggregate. The third step of the method comprises adding carbon nanotube particles characterized by an outside diameter of about 9 nm to about 18 nm, and a $D_{50}$ length of about 1 $\mu$m to about 13 $\mu$m. The dispersion obtained by this embodiment of the invention may be characterized by a total amount of carbonaceous particulate material (referring to the sum of CB and CNT particles) between about 1.5 wt% to about 10 wt% in relation to the total weight of the final dispersion, a viscosity of about 1.0 Pa*s to about 6.8 Pa*s at a shear rate of 1 Hz when tested by a modular compact rheometer, and/or a yield stress, as defined as the cross-over point of G' and G", of at least about 1.0 Pa and at most 26.0 Pa.

In some embodiments, the method as described above may further comprise additional mixing steps during any one of steps one to three, or in between steps one to four. The parameters of the constituent carbon black and/or carbon nanotube particles have to be determined prior to the dispersion formation/processing step, since it is not possible to reliably measure the physical parameters of the constituent carbon black/carbon nanotube particles after dispersion formation. The CB and/or CNT particle properties and/or their measurements are affected by the presence of the dispersant in the dispersing media. As such, parameter measurements after dispersion formation/addition of the CB and/or CNT particles to the dispersing media containing the dispersant are rendered unfeasible.

The processing step resulting in the final dispersion of CB and CNT particles may suitably be conducted in any apparatus capable of high energy mixing. In some embodiments, the processing is conducted a beads mill. Therein, any commonly available bead material, such as zirconium oxide beads, can be suitably used to conduct the processing step in a beads mill. In some embodiments, the mixing speed of the employed apparatus is set to about 10 m/s to about 15 m/s while the temperature is kept below 40 °C during processing. In particular embodiments, the mixing speed is set to 14 m/s while below 40 °C during processing.

In the dispersion forming process may additionally or alternatively be described by the amount of mixing power applied to the sample per gram of overall carbonaceous particulate material (understood as CB and/or CNT material) within the sample. Without wishing to be bound by theory, applying insufficient mixing power to a carbonaceous particulate material sample and/or mixing for an insufficient time may not result in formation of a suitably stable dispersion. Meanwhile, as understood by the skilled person, applying too much mixing power and/or mixing the sample for too long at high power may influence the rheological and stability properties of the final dispersion by affecting the particles of the dispersion through excessive shear forces. In suitable embodiments a mixing power of between about 200 W/g to about 1000 W/g of overall carbon black may be applied to the sample. Optionally the mixing power may be between about 250 W/g to about 900 W/g, or between about 250 W/g to about 800 W/g of overall carbon black. In a particular embodiment to be used for dispersing carbonaceous particulate material to access dispersions according to the invention, the mixing power applied is between about 300 W/g to about 700 W/g of overall carbon black. Additionally or alternatively, in some embodiments the mixing time is set from about 20 to about 40 minutes, such as for example to about 30 minutes. In a preferred embodiment, a mixing power of between about 300 W/g to about 700 W/g of CB and/or CNT material is applied to the sample for about 20 to 40 minutes, while the temperature is kept below 40 °C during processing.

Finally, the invention also refers to dispersions as obtained by the above described method. In certain embodiments, the dispersions as obtained by the described method may be characterized by the dispersion parameters as described above for a dispersion according to first aspect of the invention. As such, in particular embodiments of the dispersions as obtained by the described method the dispersions may be characterized by a total amount of CB and CNT particles of between about 1.5 wt% to about 10 wt%, a viscosity of about 1.0 Pa*s to about 6.8 Pa*s at a shear rate of 1 Hz when tested by a modular compact rheometer, and/or a yield stress, defined as the cross-over point of G' and G" of at least about 1.0 Pa and at most 26.0 Pa.

**Definitions**

The term "about", when used herein in the context of parameters or values mentioned herein, encompasses deviations of $\pm 10\%$ of the given value unless stated otherwise.

It is to be noted that the term "a" or "an" entity refers to one or more of that entity; for example, "a carbonaceous particulate material," is understood to represent one or more carbonaceous particulate materials. As such, the terms "a" (or "an"), "one or more," and "at least one" can be used interchangeably herein.

Furthermore, "and/or" where used herein is to be taken as specific disclosure of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).

It is understood that aspects are described herein with the language "comprising", otherwise analogous aspects described in terms of "consisting of" and/or "consisting essentially of" are also provided.

The percentage (%) values specified herein are by weight unless specified otherwise.

Units, prefixes, and symbols are denoted in their Système International d'Unités (SI) accepted form. Numeric ranges are inclusive of the numbers defining the range.

The headings provided herein are not limitations of the various aspects of the disclosure, which can be had by reference to the specification as a whole. Accordingly, the terms defined immediately below are more fully defined by reference to the specification in its entirety.

The term "C-rate" as used herein is used to describe the speed at which a battery is fully charged or discharged. For example, a C-rate of 1 C fully discharges a charged battery in 1 hour.

The terms "storage modulus" or "G'" are used interchangeably herein and describe a material's ability to store energy elastically.

The terms "loss modulus" or "G''" are used interchangeably herein and describe the measure of energy dissipated as heat when stress is applied to viscous materials.

The term "yield stress" as used herein describes the apparent yield stress that characterizes a dispersion above a critical volume fraction of a sample-spanning network. Such dispersions display highly elastic, gel-like behavior against shear forces below their yield stress. Application of a force higher than a dispersions' yield stress leads to shear-induced breakup and to thixotropic behavior.

**Measurement Methods for properties of Carbon Black, Carbon Nanotubes, or dispersion and Li-Ion batteries made thereof**

Suitable methods for determining the various properties and parameters used to define the dispersions according to the invention, as well as their constituent carbon blacks and/or carbon nanotubes are described in detail below.

Specific BET Solid Surface Area [$m^2$/g]

The method is based on the registration of the absorption isotherm of liquid nitrogen in the pressure range $p/p_0 = 0.01\text{-}0.995$, at 77 K, where p0 is the saturation pressure. The nitrogen gas adsorption was performed on an ASAP2020 from Micromeritics. The sample was degassed in a vacuum for at least 8 hours at 573 K before analysis. Following the procedure proposed by Brunauer, Emmet, and Teller (Adsorption of Gases in Multi-molecular Layers, J. Am. Chem. Soc., 1938, 60, 309-319), the monolayer capacity can be determined. On the basis of the cross-sectional area of the nitrogen molecule, the monolayer capacity, and the weight of the sample, the specific surface can then be calculated. The isotherm was measured in the pressure range $p/p_0$ 0.05-0.2, at 77 K.

Reference: S. Brunauer, P. H. Emmett, E. Teller, J. Am. Chem. Soc., 1938, 60, 309-319.

Average number of Primary Particle per Aggregate and the Degree of Branching by Transmission Electrode Microscopy (TEM)

The aggregate parameters are obtained according to ASTM D 3849 evaluating ca. 1000 well dispersed and isolated aggregates with a representative set of TEM images by an image analysis software. The powder is dispersed in 2:1 water/isopropanol mixture by ultra-sonication prior to TEM evaluation.

Reference: ASTM D 3849

Particle size distribution (PSD) by the laser diffraction method

A 0.02 g quantity of CNT powder was dispersed in 5 ml of 1wt% of PVP K30 ethanol dispersion by ultrasonication. Typically, a LASER beam lights up a cell which contains the sample of CNT suspended in water, the generated diffraction pattern is collected by the system and analyzed using the light scattering theory developed by Mie. The particle size distribution by volume is calculated and reported in $\mu$m for the three quantiles: 10% ($D_{10}$), 50% ($D_{50}$) and 90% ($D_{90}$). Here, a Horiba laser scattering PSD analyzer LA-950 was used.
Reference: GB/T 19077.1-2008/ISO 13320-1:1999

Oil Absorption Number (PAN) fmL/100 ql

The OAN is measured following the ASTM D2414 (procedure A). Paraffin oil is added to a dried carbon black sample in the mixer chamber of the absorptometer. As the sample absorbs the oil the viscosity increases. When the viscosity reaches a predetermined torque level (400 mNm) the volume of the added oil is read. The volume of oil per unit mass of carbon black is the OAN.
Reference: ASTM D2414-01
For the measurement of the compressed oil absorption number (cOAN), a sample of carbon black is compressed four times at a pressure of 165 MPa and then tested in an absorptometer to determine the oil absorption number according to method ASTM D2414-01 (see above). The difference between the initial OAN number and the OAN number of the compressed sample reflects the stability of the structure of that sample.
Reference: ASTM D3493-14

**Measurement Methods for Rheological Properties of dispersions**

Measurements were performed using a MCR302 modular rheometer from Anton Paar. The plate was a CP50-2 coneplate (50 mm diameter plate with 2° cone angle). The apparatus was regularly calibrated with a standard oil called S600. The rheometer was initialized and the zero-gap position was determined by the testing software before testing.

Viscosity measurement

The sample stage was pre-conditioned at 25 °C. Around 3 grams of dispersions was loading onto the sample stage. The coneplate was set to the measurement position and overflowed dispersion was wiped off. Dispersions were measured starting from a low shear rate of 0.01 Hz to a high shear stress of 1000 Hz and then back to a low shear stress of 0.01 Hz. The shear rate was changing in a exponential pattern. A total 42 sampling points was taken during one run. The viscosity values were read at 1 Hz in back scan.
Reference: Chiou K. et al., PNAS, 2018, 115(22), pp. 5703-5708.

Dynamic mechanical analysis (DMA) of dispersions / Storage modulus G'/ Loss modulus G"

DMA analysis was performed by fixing at a frequency of 1 Hz. An amplitude scan ($\gamma$=0.1 % to 1000%) was performed to determine the stability range of different slurries.

**Method used for benchmarking the lithium ion batteries comprising the carbon black dispersion according to the invention**

Direct contact resistance (DCR) [mΩ]

DCR tests were performed at room temperature (R.T. = 25 °C) and low temperature (L.T. = - 10 °C):
The battery cells were first charged to a state of charge (SOC) of 50% at 25 °C. The cells were then maintained at a preset temperature (R.T. or L.T.) for 3 hrs. The DCR was measured by applying a series of discharging pulse currents at a C-rate of 0.2 C, 0.5 C and 1 C. The C-rate describes the speed at which a battery is fully discharged (or charged). For example, charging at a C-rate of 1 C means that the battery is fully discharged in one hour. Each current lasted for 5 seconds. The DCR was calculated by the following equation:

$$DCR\ (R.T.\ or\ L.T.) = (V_1 - V_2)/(I_1 - I_2)$$

L.T. Discharge Energy @ 1 C test:

The cells were fully charged at R.T. and then put in a -10 °C temperature chamber for 3 hrs. The cells were then discharged at a 1 C rate to 2.5 V at -10 °C (L.T.). Discharge Energy was calculated by the following equation:

$$L.T.\ Discharge\ Energy = \frac{Discharge\ Energy\ @\ L.T.\ \&\ 1\ C}{Discharge\ Energy\ @\ R.T.\ \&\ 0.2\ C}$$

Discharge @ 5 C

The discharge rate performance test was carried out by the following steps: The cells were charged in a constant current-constant voltage ($C_C$-$C_V$) mode to 4.2 V. The cells were discharged at a constant current of n C (n = 0.2, 0.5, 1.0, 2.0, 3.0, 5.0, respectively) to 2.5 V. The discharge rate was calculated based on the following equation:

$$Discharge\ rate = \frac{Discharge\ capacity\ @\ 5\ C}{Discharge\ capacity\ @\ 0.2\ C}$$

High temperature (H.T.) capacity retention test:

The cells were fully charged to a state of charge (SOC) of 100% and stored at a constant temperature of 60 °C for a designated period of time. The cells were subsequently cooled down to 25 °C.
The remaining capacities were checked by discharging the cells to 2.5 V at 1.0 C. Capacity retention after 4 weeks = Discharge capacity after storage / Discharge capacity @ 1.0 C

H.T. storage impendence growth test:

Electrochemical impedance test was performed after re-charging the cells to SOC 100%. Impedance growth was acquired from the test.
Having described the various aspects of the present invention in general terms, it will be apparent to those of skill in the art that many modifications and slight variations are possible without departing from the spirit and scope of the present invention. The present invention is furthermore described by reference to the following, non-limiting numbered embodiments:

1. A dispersion comprising:

a) carbon black (CB) particles, wherein the carbon black particles are characterized by

(i) a BET SSA of about 40 m$^2$/g to about 650 m$^2$/g;
(ii) an oil absorption number (OAN) of about 230 mL/100 g to about 400 mL/100 g;
(iii) a compressed oil absorption number (cOAN) to OAN ratio (cOAN/OAN) of about 0.2 to about 0.85; and
(iv) less than about 235 primary particles per aggregate,

b) carbon nanotube (CNT) particles, wherein the carbon nanotube particles are characterized by

(v) an outside diameter of about 9 nm to about 18 nm; and
(vi) a $D_{50}$ length of about 1 $\mu$m to about 13 $\mu$m, and

c) a dispersing media,

wherein the dispersion comprises a carbon black ratio of CNT to CB particles of about 10:1 to about 1:1 by weight.

2. The dispersion according to embodiment 1, wherein the CB particles are characterized by a BET SSA of about 50 $m^2/g$ to about 630 $m^2/g$,
optionally wherein the CB particles are characterized by a BET SSA of about 60 $m^2/g$ to about 610 $m^2/g$.

3. The dispersion according to embodiment 1 or embodiment 2, wherein the CB particles are characterized by an oil absorption number (OAN) of about 240 mL/100 g to about 380 mL/100 g,
optionally wherein the carbon black is characterized by an OAN of about 250 mL/100 g to about 360 mL/100 g, or of about 260 mL/100 g to about 340 mL/100 g.

4. The dispersion according to any one of embodiments 1 to 3, wherein the CB particles are further characterized by a compressed oil absorption number (cOAN) of about 80 mL/100 g to about 270 mL/100 g,
optionally wherein the CB particles are further characterized by an cOAN of about 90 mL/100 g to about 260 mL/100 g, or of about 100 mL/100 g to about 250 mL/100 g, or of about 110 mU100 g to about 240 mL/100 g.

5. The dispersion according to any one of embodiments 1 to 4, wherein the CB particles are characterized by a ratio of cOAN to OAN of about 0.25 to about 0.825,

optionally wherein the CB particles are characterized by a ratio of cOAN to OAN of about 0.3 to about 0.8, or of about 0.35 to about 0.775,
further optionally wherein the ratio of cOAN to OAN is less than about 0.77.

6. The dispersion according to any one of embodiments 1 to 5, wherein the CB particles are characterized by less than about 220 primary particles per aggregate,
optionally wherein the CB particles are characterized by less than about 200 or less than about 180 primary particles per aggregate.

7. The dispersion according to any one of embodiments 1 to 6, wherein the CB particles are further characterized by a degree of branching of about 7 to about 18,

optionally wherein the CB particles are further characterized by a degree of branching of about 8 to about 17, or 9 to 16,
further optionally wherein the degree of branching is lower than 16.

8. The dispersion according to any one of embodiments 1 to 7, wherein the CB particles are further characterized by a Scott density of about 0.01 $g/cm^3$ to about 0.1 $g/cm^3$, optionally wherein the CB particles are further characterized by a Scott density of about 0.02 $g/cm^3$ to about 0.09 $g/cm^3$, or of about 0.03 $g/cm^3$ to about 0.08 $g/cm^3$, or of about 0.04 $g/cm^3$ to about 0.7 $g/cm^3$, or of about 0.045 $g/cm^3$ to about 0.065 $g/cm^3$.

9. The dispersion according to any one of embodiments 1 to 8, wherein the CB particles are selected from thermal black, acetylene black, or furnace black.

10. The dispersion according to any of embodiments 1 to 9, wherein the CNT particles are characterized by an outside diameter of about 10 nm to about 16 nm.

11. The dispersion according to any of embodiments 1 to 10, wherein the CNT particles are further characterized by a BET SSA of about 230 $m^2/g$ to about 400 $m^2/g$,

optionally wherein the CNT particles are further characterized by a BET SSA of about 240 $m^2/g$ to about 350 $m^2/g$, or of about 250 $m^2/g$ to about 310 $m^2/g$;

further optionally wherein the CNT particles are further characterized by a BET SSA of less than 300 m$^2$/g

12. The dispersion according to any of embodiments 1 to 11, wherein the CNT particles are characterized by a $D_{50}$ length of about 2 μm to about 11 μm, optionally wherein the CNT particles are characterized by $D_{50}$ length from about 3 μm to about 10 μm, or from about 9 μm to about 13 μm.

13. The dispersion according to any one of embodiments 1 to 12, wherein at least a portion of the CNT particles are multi-walled.

14. The dispersion according to any one of embodiments 1 to 13, wherein the dispersing media is an organic solvent,

optionally wherein the organic solvent is an amide-based solvent,
further optionally wherein the amide-based solvent is N-Methyl-2-pyrrolidone (NMP).

15. The dispersion according to any one of embodiments 1 to 14, wherein the dispersing media further comprises a dispersing agent,

optionally wherein the dispersing agent is an organic dispersing agent,
further optionally wherein the organic dispersing agent is a polymeric organic dispersing agent,
further optionally wherein the polymeric organic dispersing agent is Polyvinylpyrrolidone (PVP).

16. The dispersion according to any one of embodiments 1 to 15, wherein the dispersing media comprises the dispersing agent in an amount less than about 2 wt%, optionally wherein the dispersing agent is comprised in the dispersing media in an amount less than about 1.8 wt%, or less than about 1.6 wt%, or less than about 1.4 wt%, or less than about 1.2 wt%, or less than about 1.0 wt%.

17. The dispersion according to any one of embodiments 1 to 16, characterized in that the dispersion has

d) a total amount of CB and CNT particles between about 1.5 wt% to about 10 wt%;
e) a viscosity of about 1.0 Pa*s to about 6.8 Pa*s at a shear rate of 1 Hz when tested by a modular compact rheometer; and/or
f) a yield stress, defined as the cross-over point of G' and G" of at least about 1.0 Pa and at most 26.0 Pa.

18. The dispersion according to any one of embodiments 1 to 17, wherein the total amount of CB and CNT particles in the dispersion is from about 2 wt% to about 9 wt%, optionally wherein the total amount of CB and CNT particles in the dispersion is from about 2.5 wt% to about 8 wt%, or from of about 3 wt% to about 7 wt%, or of from about 3.5 wt% to about 6 wt%.

19. The dispersion according to any one of embodiments 1 to 18, wherein the dispersion is characterized by a viscosity of about 1.2 Pa*s to about 6.6 Pa*s at a shear rate of 1 Hz when tested by a modular compact rheometer, optionally wherein the dispersion is characterized by a viscosity of about 1.4 Pa*s to about 6.4 Pa*s at a shear rate of 1 Hz when tested by a modular compact rheometer.

20. The dispersion according to any one of embodiments 1 to 19, wherein the dispersion is characterized by a yield stress, defined as the cross-over point of G' and G", of at least about 1.2 Pa and at most about 24.0 Pa, optionally wherein the dispersion is characterized by a yield stress, defined as the cross-over point of G' and G", of at least about 1.5 Pa and at most about 22.0 Pa.

21. The dispersion according to any one embodiments 1 to 20, wherein the dispersion is characterized by a loss modulus (G") ranging from about 0.5 Pa to about 50 Pa and a storage modulus (G') ranging from about 0.5 Pa to about 150 Pa at a shear stress range of about 0.001 Pa to about 2 Pa when tested by a modular compact rheometer, optionally wherein the dispersion is characterized by a loss modulus (G") ranging from about 1 Pa to about 45 Pa and a storage modulus (G') ranging from about 1 Pa to about 140 Pa, or a loss modulus (G") ranging from about 2 Pa to about 40 Pa and a storage modulus (G') ranging from about 2 Pa to about 130 Pa at a shear stress range of about 0.001 Pa to about 2 Pa when tested by a modular compact rheometer.

22. The dispersion according to any one of embodiments 1 to 21, wherein the dispersion is characterized by a loss

factor tan($\delta$) of about 0.35 to about 0.85 at a shear stress of 0.1 Pa at a shear stress range of about 0.001 Pa to about 2 Pa when tested by a modular compact rheometer,

optionally wherein the dispersion is characterized by a loss factor tan($\delta$) of from about 0.4 to about 0.8, or of from about 0.45 to about 0.75 at a shear stress of about 0.001 Pa to about 2 Pa range when tested by a modular compact rheometer.

23. A cathode slurry composition comprising:

g) the dispersion of any one of embodiments 1 to 22;
h) an active lithium material;
i) the dispersing media; and
j) a binder.

24. A cathode slurry composition according to embodiment 23, wherein

k) the dispersion of any one of embodiments 1 to 22 is comprised in the slurry composition from about 0.3 wt% to about 3 wt%, optionally from about 0.4 wt% to about 2.5 wt%, or from about 0.5 wt% to about 2 wt%;
l) the active lithium material is comprised in the slurry composition from about 60 wt% to about 80 wt%, optionally from about 65 wt% to about 75 wt%; further optionally wherein the active lithium material is lithium nickel cobalt manganese oxide;
m) the dispersing media is N-Methyl-2-pyrrolidone (NMP);
n) the binder is comprised in the slurry composition from about 1 wt% to about 5 wt%, optionally from about 1.5 wt% to about 4.5 wt%; further optionally wherein the binder is an organic polymer, further optionally wherein the binder is polyvinylidene fluoride (PVDF); and/or
o) wherein the final solid content of the slurry composition is from about 35 wt% to about 90 wt%, optionally wherein the solid content is from about 45 wt% to about 85 wt%, or from about 55 wt% to about 80 wt%, or from about 65 wt% to about 75 wt%.

25. A cathode, wherein the cathode is produced by applying the cathode slurry composition according to embodiment 23 or embodiment 24 on a substrate and subsequently drying the coated substrate at a temperature of at least 100 °C for at least 5 mins.

26. The cathode according to embodiment 25, wherein the substrate is a metal foil, optionally wherein the metal foil comprises at least one metal, or an alloy, or a mixture comprising the at least one metal,

further optionally wherein the metal, or an alloy, or a mixture comprising the at least one metal comprises aluminium, iron, zinc, nickel, copper, silver, and/or gold.

27. The cathode according to embodiment 25 or embodiment 26, wherein the composition is applied to the substrate by means of a roll-to-roll process.

28. A lithium ion battery comprising a cathode according to embodiment 27.

29. A method for making a dispersion comprising:

p) dispersing a dispersant in a solvent;
q) adding carbon black (CB) particles to the solvent, wherein the carbon black is characterized by

(vii) a BET SSA of about 40 $m^2$/g to about 650 $m^2$/g;
(viii) an oil absorption number (OAN) of about 230 mL/100 g to about 400 mL/100 g;
(ix) a compressed oil absorption number (cOAN) to OAN ratio (cOAN/OAN) of about 0.2 to about 0.85; and
(x) less than about 235 primary particles per aggregate;

r) adding carbon nanotube (CNT) particles to the solvent, wherein the carbon nanotubes are characterized by

(xi) an outside diameter of about 9 nm to about 18 nm; and
(xii) a $D_{50}$ length of about 1 $\mu$m to about 13 $\mu$m;

s) mixing the solvent comprising the dispersant, CB particles, and CNT particles in a mixer,

wherein the CNT particles to CB particles are added in a ratio of about 10:1 (w/w) to about 1:1 (w/w) to each other.

30. The method of embodiment 29, wherein the mixing step comprises applying a mixing power of between about 200 W/g to about 1000 W/g of overall carbon black within a sample. Optionally the mixing power applied is between about 250 W/g to about 900 W/g, or between about 250 W/g to about 800 W/g, or between about 300 W/g to about 700 W/g of overall carbon black within a sample.

Further optionally, wherein the mixing time of the mixing step is set to about 20 to about 40 minutes, such as to 30 minutes

31. The method of embodiment 29 or embodiment 30, wherein the final dispersion is characterized by

t) a total amount of CB and CNT particles between about 1.5 wt% to about 10 wt%;
u) a viscosity of about 1.0 Pa*s to about 6.8 Pa*s at a shear rate of 1 Hz when tested by a modular compact rheometer, and/or
v) a yield stress, defined as the cross-over point of G' and G" of at least about 1.0 Pa and at most 26.0 Pa.

## EXAMPLES

### Example 1 - Physical properties of carbon blacks

The physical properties of a variety of carbon black particles according to the instant invention were measured, and compared to those of a variety of known/commercially available comparative carbon black particles.

CB 1 particles are a commercial product available under the trade name C-NERGY™ Super C65 Conductive Carbon Black. CB 2 particles are a commercial product available under the trade name C-NERGY™ Super C130 Conductive Carbon Black. CB 3 particles are a commercial product available under the trade name C-NERGY™ Super C600 Conductive Carbon Black.

For comparative dispersion Examples, common commercially available carbon black particles (cCB 1 to cCB 3 particles) were used.

The physical properties of the carbon black materials to be used in dispersions according to the present disclosure (carbon blacks CB 1 to CB 3) were compared to known and commercially available comparative carbon black materials cCB 1 to cCB 3.

**Table 1: Physical properties of carbon blacks**

| Carbon blacks | BET SSA [$m^2$/g] | OAN [mL/100 g] | cOAN [ml/100 g] | cOAN/ OAN | Degree of branching | Primary particle per aggregate | Scott density [g/$cm^3$] |
|---|---|---|---|---|---|---|---|
| CB 1 particles | 63 | 290 | 110 | 0.38 | 15 | 218 | 0.059 |
| CB2 particles | 121 | 260 | 130 | 0.5 | 10 | 153 | 0.044 |
| CB 3 particles | 602 | 321 | 240 | 0.75 | 12 | 174 | 0.031 |
| cCB 1 particles | 69 | 198 | 123 | 0.62 | 14 | 238 | 0.158 |
| cCB 2 particles | 133 | 164 | 133 | 0.81 | 19 | 667 | 0.079 |
| cCB 3 particles | 745 | 338 | 289 | 0.85 | 10 | 109 | 0.037 |

As is apparent from the table above, the carbon black particles tested for use in dispersions cover a wide range BET SSAs (between 50 $m^2$/g and 750 $m^2$/g). Generally, it was attempted to benchmark CB particles according to the invention with comparative cCB particles with a similar BET SSA. Generally, cCB particles were characterized by a higher ratio of cOAN/OAN and a higher Scott density compared to CB particles according to the invention.

### Example 2 - Carbon black dispersions

Different types of carbon blacks show different behaviors in the dispersions. Some are easily dispersed, some are not. Moreover, after dispersion by dispersing processes some CBs do not display sufficient dispersion stability, meaning the particles will accumulate and separate from the liquid phase. This indicates weak interaction between CB particles and the dispersant. A part of the objective of the current invention was to identify CB and/or CNT parameters that enable the reliable formation of suitable and stable CB+CNT dispersions.

In order to study the interaction between CBs in highly concentrated dispersions, various carbon black dispersions comprising both the CB particles according to the invention and the comparative cCB particles listed under Example 1 were further analyzed in terms of their rheological properties, namely viscosity and yield stress. Yield stress hereby marks the point at which the externally applied stress causes the indirect (solvent-particle) "lubricated" contacts between particles to break down. Carbon black dispersions were prepared from both the CB particles according to the invention and the comparative cCB particles of Table 1.

For dispersion formation of CB (and CNT) particles high mixing forces have to be applied. Parameters of the carbon blacks had to be measured prior to dispersion formation, since it was not possible to measure the physical parameters of the carbon blacks after dispersion formation due to the presence of the dispersant. Identical dispersion methods were used for all carbon blacks to allow inter-comparability between individual dispersions.

For dispersion formation of the comparative CB dispersions, first a dispersant polyvinylpyrrolidone (PVP) was pre-dispersed in N-methyl-pyrrolidone (NMP) as solvent. The CB particles were gradually added under mechanical mixing. The concentration of PVP was 1%wt and the overall concentration of carbon black was between 8.5%wt% to 10% wt%. This initial mixture was transferred to a beads mill made by Ashizawa (Labstar mini LMZ015) and Zirconium oxide beads with a diameter of 0.5 mm were used. The total filling ratio of the milling chamber was 85%. The mixing speed of the machine was set to 15 m/s while below 40 °C for a milling/dispersing time of 3 minutes. Following this process the carbon black dispersions to be tested were obtained. The rheological properties of the thus-obtained CB dispersions are summarized in Table 2 below.

**Table 2: Composition and rheological properties of carbon black dispersions**

|  | Carbon solid content [wt%] | Viscosity [Pa*s @1 Hz] | Yield stress [mPa] | $\tan(\delta)$ |
|---|---|---|---|---|
| CB 1 | 10 | 0.11 | 18.5 | 0.80 |
| CB 2 | 10 | 1.14 | 892 | 0.13 |
| CB 3 | 9 | 2.51 | 2190 | 0.12 |
| cCB 1 | 10 | 0.006 | 11 | 0.23 |
| cCB 2 | 10 | 0.1 | 0 | N.A. |
| cCB 3 | 8.5 | 93.6 | 145400 | 0.08 |

A dynamic mechanical analysis (DMA) of the dispersions listed above is depicted in Figures 1A, 1B, 2A, and 2B. Generally speaking, a dispersion should have higher storage modulus G' over loss modulus G" in order to have enough dispersion stability during storage (Hawley, W. Blake, and J. Li, Journal of Energy Storage, 2019, 26, 100994).

For the dispersions the $\tan(\delta)$ values reported herein (see Tables 2, 4, 6) are averaged from the first measurable data point $\tan(\delta)$ (first value) to the data point $\tan(\delta)$ (first value + 0.05 Pa) to account for shifts within the first few reported $\tan(\delta)$ values. The complete $\tan(\delta)$ graphs are reported as Figures 2A, 2B, 7A, 7B, 8, 9A, and 9B.

For cCB1, the "stable zone" of G' over G" observed was very narrow (Figure 1B). Meanwhile for cCB 2, the dispersion shows G">G' over the DMA analysis, indicating unstable dispersion behaviour. This suggests that cCB 1 and cCB 2 are not able to form sufficiently stable dispersions at high carbon black concentrations. On the other hand, cCB 3 showed distinct high modulus and high yield stress, which is one order of magnitude higher than the rest. However, it also demonstrated a much "solid-like" behavior as evidenced by its very high viscosity, which made the handling of the dispersion very challenging. However, the inventors have realized for the first time that for a given BET, selecting carbon black particle starting materials with a lower cOAN/OAN ratio of the carbon black will enable the skilled person to access more favorable and easy-to-handle dispersions as characterized by parameters such as a workable viscosity (from about 0.1 Pa*s to 8.0 Pa*s) (cf. Figures 1A to 2B).

**Example 3** - **Carbon nanotube dispersions**

To demonstrate how carbon nanotube dispersions are affected by the presence of different carbon blacks in the dispersion, three different types of carbon nanotubes were selected to be tested in combination with various carbon blacks. CNT1 particles are a commercial product available under any of the trade names Cabot Enermax 31 or Cnano FT9100. CNT2 particles are a commercial product available under any of the trade names Nanocyl NX7100 or Cnano FT7230. CNT3 particles are a commercial product available under any of the trade names JEIO Tube8B or Cnano FT6100 OR Cnano FT6120. The CNT trade names listed above are not exhaustive, and the CNT's are also available under other trade names. The parameters of said carbon nanotubes are summarized in Table 3:

**Table 3: Physical properties of carbon nanotubes**

| Carbon nanotube Powders | BET SSA [$m^2$/g] | Length $D_{50}$ [$\mu$m] | Outer diameter [nm] |
|---|---|---|---|
| CNT 1 particles | 250 | 6.3 | 15 |
| CNT 2 particles | 280 | 9.2 | 11 |
| CNT 3 particles | 310 | 15.3 | 8 |

From the CNT1 to CNT3 particles comparative dispersion were prepared to demonstrate the effect of various CNT parameters on the resulting CNT dispersions. During dispersion formation of carbon nanotube (CNT) (and/or carbon black + carbon nanotube (CB+CNT)) particles high milling forces are applied. Parameters of the constituent carbon nanotube (and/or carbon black) particles had to be measured prior to dispersion formation, since it was not possible to measure the physical parameters of the carbon black/carbon nanotube particles after dispersion formation due to the presence of the dispersant. Identical dispersion methods for dispersion were used to allow for inter-comparability between individual dispersions.

For dispersion formation of the comparative CNT particle dispersions, first a dispersant polyvinylpyrrolidone (PVP) was pre-dispersed in N-methyl-pyrrolidone (NMP) as solvent. The CNT particles were gradually added under mechanical mixing. The concentration of PVP was 1wt% and the concentration of CNT are shown in Table 4. This initial mixture was transferred to a beads mill made by Ashizawa (Labstar mini LMZ015) and Zirconium oxide beads with a diameter of 0.5 mm were used. The total filling ratio of the milling chamber was 85%. After proper wetting of the carbon powders, the mixing speed of the machine was set to 14 m/s while below 40 °C for a milling/dispersing time of 30 mins to obtain CNT particle dispersions. Following this process the carbon black/carbon nanotube dispersions to be tested were obtained. The obtained CNT particle dispersions are summarized in Table 4:

**Table 4: Composition and rheological properties of carbon nanotube dispersions**

| | Type of carbon nanotube | Carbon solid content [wt%] | Viscosity [Pa*s @1 Hz] | Yield stress [mPa] | tan($\delta$) |
|---|---|---|---|---|---|
| cCNT 1 | 1 | 4 | 1.07 | 1.7 | 0.39 |
| cCNT 2 | 1 | 5 | 5.68 | 120 | 0.15 |
| cCNT 3 | 2 | 2.5 | 1.5 | 1.3 | 0.73 |
| cCNT 4 | 3 | 1.3 | 9.0 | 4.1 | 0.28 |

Table 4 demonstrates that for dispersion containing only carbon nanotubes and no additive carbon black, the parameter most affecting dispersion properties is the amount of CNT particles dispersed. Moreover, when comparing the examples above, especially cCNT 1 and cCNT 4, it becomes apparent that the average length $D_{50}$ of the starting carbon nanotubes seem to disproportionately affect dispersion characteristics, with shorter CNT resulting in a much higher possible CNT loading before the dispersion becomes unworkable.

**Example 4 - Carbon black + carbon nanotube dispersions**

The inventors have surprisingly found that stable dispersion with a suitable viscosity and yield stress can be obtained by carefully selecting the constituent carbon blacks and carbon nanotube and their respective ratio to each other prior to dispersion preparation. Moreover, it was discovered that the obtained inventive dispersions are especially suitable for their use in preparing lithium ion battery cathodes.

For dispersion formation, first a dispersant polyvinylpyrrolidone (PVP) was pre-dispersed in *N*-methyl-pyrrolidone (NMP) as solvent. The CNT particles were gradually added under mechanical mixing, followed by the CB particles under mechanical mixing. The concentration of PVP was 1wt% and the concentrations of CB and CNT were shown in Table 4. This initial mixture was transferred to a beads mill made by Ashizawa (Labstar mini LMZ015) and Zirconium oxide beads with a diameter of 0.5 mm were used. The total filling ratio of the milling chamber was 85%. After proper wetting of the carbon powders, the mixing speed of the machine was set to 14 m/s while below 40 °C for a milling/dispersing time of 30 mins to obtain CB+CNT particle dispersions. The tested CB+CNT mixtures and their respective amounts of carbonaceous particulate material constituents are summarized below in Table 5:

**Table 5: Compositions of carbon nanotube or carbon black + carbon nanotube dispersions**

| | Type of carbon black | Type of carbon nanotube | CNT weight ratio [wt%] | CB weight ratio [wt%] | Overall carbon ratio [wt%] | PVP weight ratio [wt%] |
|---|---|---|---|---|---|---|
| IE 1 | CB 1 | CNT 1 | 4.1 | 1.7 | 5.8 | 1.0 |
| IE 2 | CB 2 | CNT 1 | 4.1 | 1.7 | 5.8 | 1.0 |
| IE 3 | CB 3 | CNT 1 | 4.1 | 1.7 | 5.8 | 1.0 |
| IE 4 | CB 1 | CNT 1 | 5 | 0.5 | 5.5 | 1.0 |
| IE 5 | CB 1 | CNT 1 | 5 | 2 | 7 | 1.4 |
| IE 6 | CB 1 | CNT 2 | 2.5 | 1.0 | 3.5 | 0.85 |
| IE 7 | CB 2 | CNT 2 | 2.5 | 1.0 | 3.5 | 0.85 |
| IE 8 | CB 3 | CNT 2 | 2.5 | 1.0 | 3.5 | 0.85 |
| CE 1 | cCB 1 | CNT 1 | 4.1 | 1.7 | 5.8 | 1.0 |
| CE 2 | cCB 2 | CNT 1 | 4.1 | 1.7 | 5.8 | 1.0 |
| CE 3 | cCB 3 | CNT 1 | 4 | 1.6 | 5.6 | 1.0 |
| CE 4 | cCB 1 | CNT 2 | 2.5 | 1.0 | 3.5 | 0.85 |
| CE 5 | cCB 2 | CNT 2 | 2.5 | 1.0 | 3.5 | 0.85 |
| CE 6 | cCB 3 | CNT 2 | 2.5 | 1.0 | 3.5 | 0.85 |
| CE 7 | | CNT 3 | 1.2 | | 1.2 | 1.0 |

As can be seen from Table 5, overall carbon loadings from about 1.2 wt% to about 5.8 wt% were tested. Generally, examples with lower overall carbon loading also comprised a lower dispersant loading. Various ratios of CNT:CB were tested.

CE 7 was prepared as above, but with much lower solids content due to the difficulties in mixing. Figure 10 shows an image of the resulting mixture, which was a very thick paste and unsuitable for performing further testing for its rheological properties.

**Rheological properties of carbon black + carbon nanotube dispersions**

The rheological properties of dispersions 1 to 8 according to the invention (IE 1 to IE 8) and comparison dispersions CE 1 to CE 6 were tested via DMA analysis. Their respective viscosities, yield stresses and the tan($\delta$) are summarized in Table 6:

**Table 6: Rheological properties of carbon black + carbon nanotube dispersions**

| | Type of carbon black | Type of carbon nanotube | Viscosity [Pa*s] @1 Hz | Yield stress [Pa] | tan($\delta$) |
|---|---|---|---|---|---|
| IE 1 | CB 1 | CNT 1 | 1.54 | 1.6 | 0.69 |
| IE 2 | CB 2 | CNT 1 | 1.43 | 3.6 | 0.54 |
| IE 3 | CB 3 | CNT 1 | 2.28 | 8.4 | 0.49 |
| IE 4 | CB 1 | CNT 1 | 5.83 | 19.6 | 0.37 |
| IE 5 | CB 1 | CNT 1 | 6.35 | 13.9 | 0.30 |
| IE 6 | CB 1 | CNT 2 | 1.73 | 1.4 | 0.70 |
| IE 7 | CB 2 | CNT 2 | 2.85 | 3.4 | 0.59 |
| IE 8 | CB 3 | CNT 2 | 3.65 | 7.4 | 0.53 |
| CE 1 | cCB 1 | CNT 1 | 0.86 | N.A | 1.10, not stable |
| CE 2 | cCB 2 | CNT 1 | 1.69 | N.A | 1.57, not stable |
| CE 3 | cCB 3 | CNT 1 | 11.7 | 30.5 | 0.26 |

(continued)

| | Type of carbon black | Type of carbon nanotube | Viscosity [Pa*s] @1 Hz | Yield stress [Pa] | tan($\delta$) |
|---|---|---|---|---|---|
| CE 4 | cCB 1 | CNT 2 | 1.67 | N.A | 1.07 |
| CE 5 | cCB 2 | CNT 2 | 1.85 | N.A | 1.05 |
| CE 6 | cCB 3 | CNT 2 | 13.5 | 22.8 | 0.28 |

The DMA measurements of these dispersions plotting the course of the viscosity, storage modulus G' and loss modulus G" over a range of shear stresses are depicted in Figures 3A-1 to 6B. Generally speaking, a dispersion should have higher storage modulus G' over loss modulus G" in order to have enough dispersion stability during storage (Hawley, W. Blake, and J. Li, Journal of Energy Storage, 2019, 26, 100994). Additionally, Figures 7A to 9B depict the course of the tan($\delta$) value calculated as G"/G' over a range of shear stresses for the dispersions.

From Table 6 in combination with figures 3A-1 to 9B depicting the rheology data, it can be observed that dispersion IE 1 to IE 3 and comparison dispersions CE 1 and CE 2 are all showing reasonable viscosities (<3 Pa*s) at 1 Hz shear rate. However, comparison CE 3 is showing much higher viscosity than the rest of dispersions, even higher than 5 wt% carbon nanotube dispersion (cCNT 2, 5.68 Pa*s). It suggests that CE 3 is not a good candidate for an easy-to-handle dispersion.

Regarding the stability of dispersions, inventive dispersions IE 2 and IE 3 show reasonable G'>G" over a wide range of shear stress, indicating stability of the dispersion. Comparison dispersions CE 1 and CE 2 both show unstable behavior during DMA analysis. For both cases, G' is very close to G" with several cross-over points during when increasing shear stress. This indicates that the agglomerates are forming every now and then with the increase of applied force. This will eventually lead to sedimentation of carbon solid in dispersions. On the other hand, for comparison dispersion CE 3, the very distinct difference between G' and G" indicates the solid-like behavior of the dispersion. In fact, at this state, the dispersion behaves already like a vacuum grease, which is poses major challenges to processing.

In conclusion, from dispersions IE 1 to IE 4 and comparison CE 1 to CE 3 - each formulated with the same carbon nanotube sample 1 - it can be observed that the rheological trend in dispersions comprising a mixture of carbon black and carbon nanotubes follows the trend first observed in Example 2, namely that a lower cOAN/OAN ratio of the starting carbon black particles will lead to a more favorable dispersion as characterized by a workable viscosity. In particular, a comparison between inventive examples IE 1, IE 4, and IE 5 (all prepared with CB1 and CNT1) demonstrates the importance of the ratio between CB and CNT and the effect of an increase in the amount of CB on the rheological properties of the final dispersion.

A comparison of inventive examples IE 1 to IE 3 (with 5.8 wt% overall carbon loading) and IE 6 to IE 8 (with 3.5 wt% overall carbon loading), or comparative dispersions CE 1 to CE 3 with comparative dispersions CE 4 to CE 6 demonstrates that CNT 1 particles appear to allow for higher overall carbon loading than CNT 2 particles while displaying favorable dispersion properties. Meanwhile, it was not possible to form suitable dispersions with CNT 3 particles. Finally dispersions prepared with carbon black particles according to the invention display superior rheological properties compared to dispersion prepared from the comparative carbon black particles.

**Example 5 - Preparation of batteries using carbon nanotube + carbon black disperison For the negative electrode:**

Synthetic graphite was weighed and put into the mixer machine's container. The powder was then mixed for 5 minutes at low mixing speed. The mixing process can be carried out by various mixers that are used for producing the electrode slurry for coating. For example a Primix 2P-03 type mixer can be used with a mixing speed of 20 rpm.

1 wt% Sodium carboxymethylcellulose (CMC) and 0.5 wt% carbon black dispersion (Imerys energy C65T) was added and mixed at 50 rpm for 30 min. The slurry was then mixed at 80 rpm for 30 min. Finally, Styrene-Butadiene Rubber (SBR, 48.5 wt%) suspension was added into the container. The slurry was stirred at 80 rpm for 30 min and then degassed at 20 rpm for 10 min. DI water was added to adjust the solid content to 49 wt%. The weight ratio between different components were graphite : carbon black dispersion : CMC : binder = 97.5:0.5:1.0:1.5.

The resulting slurry was coated onto copper foil using a roll to roll coater while drying at 80°C. The loading mass for the material was 8 mg/cm$^2$. The electrode material was pressed to a density of 1.6 g/cm$^3$.

**For the positive electrode**

The preparation of the positive electrode used the same mixer as for the negative electrode. The final slurry composition for the positive electrode was lithium nickel cobalt manganese oxide : carbon black dispersion according to the invention : binder = 96:1:3 with a solid content of 70%. The solvent used in positive electrode preparation was N-Methyl-2-pyrrolidone (NMP). The conducting additive was from the dispersion IE 1 according to the invention for the one, and from CE 1 for the comparative cathode.

The slurry was then coated onto Aluminum foil with a roll-to-roll coater. The drying temperature was 110°C for between about 1 and 2 min. The loading mass for the material was 14 mg/cm$^2$. The electrode material was pressed to a density of 3.2 g/cm$^3$.

**Preparation of a pouch cell**

500 mAh pouch cells were assembled in a dry room with a dew point of below -40°C. The electrolyte was 1M LiPF6 EC/EMC/DMC (1/3 each in volume) with 1 wt% vinylene carbonate (VC).

**Example 6 - Performance of batteries comprising carbon nanotube + carbon black dispersions**

As demonstrated by Example 1 to 5, the influence of carbon black components on the ease of handling and stability of carbon black + carbon nanotube dispersion has been investigated. The rheological behavior of said carbon black + carbon nanotube dispersions will in turn influence the quality of electrode slurries prepared therefrom. Higher-quality electrodes subsequently display higher battery performance.

Two pouch cells, one with a cathode comprising the IE 1 dispersion according to the invention, the other with a cathode comprising the CE 1 dispersion with similar carbon black BET SSA were prepared. Parameters of both pouch cells, including DCR, discharge rate, and the increase in impendence after four weeks of high temperature (H.T.) storage were evaluated and the results summarized in Table 7.

**Table 7: The battery performance of different carbon nanotube + carbon black dispersions**

| Dispersion sample | R.T. DCR [mΩ] | L.T. DCR [mΩ] | Discharge rate @ 5C [wt%] | L.T. Discharge Energy @ - 10 °C 1C [wt%] | HT storage capacity retention after 4 weeks [wt%] | HT storage impedance growth after 4 weeks [mΩ] |
|---|---|---|---|---|---|---|
| Dispersion 1 | 142.6 | 727.2 | 77.6 | 69.1 | 92.4 | 75 |
| Comparison 1 | 152.6 | 759.3 | 73.2 | 67.0 | 90.6 | 90 |

Thus, the optimized carbon black + carbon nanotube dispersions according to the invention enable the formation of improved electrodes, which in turn result in improved battery performance.

In sum, the inventors have surprisingly discovered stable dispersions with suitable rheological properties comprising both CB particles and CNT particles obtainable by careful selection of said CB and CNT particles, that have a surprising and profound beneficial effect on lithium ion batteries build with cathodes comprising the inventive dispersion, despite the inventive dispersion being only contained in only about 1 wt% in said cathodes as conductive additive. Without wishing to be bound by theory, it is believed that part of the reason why the dispersion enables the formation of improved cathodes is that the inventive dispersion enables improved carbon black conductor distribution within the cathode composition due to the improved dispersion characteristics.

**Claims**

1. A dispersion comprising:

w) carbon black (CB) particles, wherein the carbon black particles are **characterized by**

(i) a BET SSA of about 40 m$^2$/g to about 650 m$^2$/g;
(ii) an oil absorption number (OAN) of about 230 mL/100 g to about 400 mL/100 g;
(iii) a compressed oil absorption number (cOAN) to OAN ratio (cOAN/OAN) of about 0.2 to about 0.85; and
(iv) less than about 235 primary particles per aggregate,

x) carbon nanotube (CNT) particles, wherein the carbon nanotube particles are **characterized by**

(i) an outside diameter of about 9 nm to about 18 nm; and
(ii) a D$_{50}$ length of about 1 μm to about 13 μm, and

y) a dispersing media,

wherein the dispersion comprises a carbon black ratio of CNT to CB particles of about 10:1 to about 1:1 by weight.

2. The dispersion according to claim 1, wherein the CB particles are further **characterized by** a degree of branching of about 7 to about 18,

optionally wherein the CB particles are further **characterized by** a degree of branching of about 8 to about 17, or 9 to 16,
further optionally wherein the degree of branching is lower than 16.

3. The dispersion according to any of claims 1 to 2, wherein the CNT particles are further **characterized by** a BET SSA of about 230 $m^2$/g to about 400 $m^2$/g,

optionally wherein the CNT particles are further **characterized by** a BET SSA of about 240 $m^2$/g to about 350 $m^2$/g, or of about 250 $m^2$/g to about 310 $m^2$/g;
further optionally wherein the CNT particles are further **characterized by** a BET SSA of less than 300 $m^2$/g.

4. The dispersion according to any one of claims 1 to 3, wherein at least a portion of the CNT particles are multi-walled.

5. The dispersion according to any one of claims 1 to 4, wherein the dispersing media comprises the dispersing agent in less than about 2 wt%,
optionally wherein the dispersing agent is comprised in the dispersing media in an amount less than about 1.8 wt%, or less than about 1.6 wt%, or less than about 1.4 wt%, or less than about 1.2 wt%, or less than about 1.0 wt%.

6. The dispersion according to any one of claims 1 to 5, **characterized in that** the dispersion has

a) a total amount of CB and CNT particles between about 1.5 wt% to about 10 wt%;
b) a viscosity of about 1.0 Pa*s to about 6.8 Pa*s at a shear rate of 1 Hz when tested by a modular compact rheometer; and/or
c) a yield stress, defined as the cross-over point of G' and G" of at least about 1.0 Pa and at most 26.0 Pa.

7. The dispersion according to any one of claims 1 to 6, wherein the dispersion is **characterized by** a viscosity of about 1.2 Pa*s to about 6.6 Pa*s at a shear rate of 1 Hz when tested by a modular compact rheometer,
optionally wherein the dispersion is **characterized by** a viscosity of about 1.4 Pa*s to about 6.4 Pa*s at a shear rate of 1 Hz when tested by a modular compact rheometer.

8. The dispersion according to any one of claims 1 to 7, wherein the dispersion is **characterized by** a yield stress, defined as the cross-over point of G' and G", of at least about 1.2 Pa and at most about 24.0 Pa,
optionally wherein the dispersion is **characterized by** a yield stress, defined as the cross-over point of G' and G", of at least about 1.5 Pa and at most about 22.0 Pa.

9. The dispersion according to any one claims 1 to 8, wherein the dispersion is **characterized by** a loss modulus (G") ranging from about 0.5 Pa to about 50 Pa and a storage modulus (G') ranging from about 0.5 Pa to about 150 Pa at a shear stress range of about 0.001 Pa to about 2 Pa when tested by a modular compact rheometer, optionally wherein the dispersion is **characterized by** a loss modulus (G") ranging from about 1 Pa to about 45 Pa and a storage modulus (G') ranging from about 1 Pa to about 140 Pa, or a loss modulus (G") ranging from about 2 Pa to about 40 Pa and a storage modulus (G') ranging from about 2 Pa to about 130 Pa at a shear stress range of about 0.001 Pa to about 2 Pa when tested by a modular compact rheometer.

10. The dispersion according to any one of claims 1 to 9, wherein the dispersion is **characterized by** a loss factor tan($\delta$) of about 0.35 to about 0.85 at a shear stress of 0.1 Pa at a shear stress range of about 0.001 Pa to about 2 Pa when tested by a modular compact rheometer,
optionally wherein the dispersion is **characterized by** a loss factor tan($\delta$) of from about 0.4 to about 0.8, or of from about 0.45 to about 0.75 at a shear stress of about 0.001 Pa to about 2 Pa range when tested by a modular compact rheometer.

11. A cathode slurry composition comprising:

a) the dispersion of any one of claims 1 to 10;
b) an active lithium material;
c) the dispersing media; and
d) a binder.

12. A cathode, wherein the cathode is produced by applying the cathode slurry composition according to claim 11 on a substrate and subsequently drying the coated substrate at a temperature of at least 100 °C for at least 5 mins.

13. A lithium ion battery comprising a cathode according to claim 12.

14. A method for making a dispersion comprising:

a) dispersing a dispersant in a solvent;
b) adding carbon black (CB) particles to the solvent, wherein the carbon black is **characterized by**

(i) a BET SSA of about 40 $m^2/g$ to about 650 $m^2/g$;
(ii) an oil absorption number (OAN) of about 230 mL/100 g to about 400 mL/100 g;
(iii) a compressed oil absorption number (cOAN) to OAN ratio (cOAN/OAN) of about 0.2 to about 0.85; and
(iv) less than about 235 primary particles per aggregate;

c) adding carbon nanotube (CNT) particles to the solvent, wherein the carbon nanotubes are **characterized by**

(i) an outside diameter of about 9 nm to about 18 nm; and
(ii) a $D_{50}$ length of about 1 $\mu$m to about 13 $\mu$m;

d) mixing the solvent comprising the dispersant, CB particles, and CNT particles in a mixer,

wherein the CNT particles to CB particles are added in a ratio of about 10:1 (w/w) to about 1:1 (w/w) to each other.

15. The method of claim 14, wherein the final dispersion is **characterized by**

a) a total amount of CB and CNT particles between about 1.5 wt% to about 10 wt%;
b) a viscosity of about 1.0 Pa*s to about 6.8 Pa*s at a shear rate of 1 Hz when tested by a modular compact rheometer, and/or
c) a yield stress, defined as the cross-over point of G' and G" of at least about 1.0 Pa and at most 26.0 Pa.

Figure 1A

Figure 1B

Figure 2A

Figure 2B

Figure 3A-1

Figure 3A-2

Figure 3B

Figure 3C-1

Figure 3C-2

**Figure 4A**

**Figure 4B**

Figure 5

Figure 6A

Figure 6B

Figure 7A

## Figure 7B

## Figure 8

Figure 9A

Figure 9B

Figure 10

Figure 11

**EP 4 517 851 A1**

Europäisches
Patentamt
European
Patent Office
Office européen
des brevets

# EUROPEAN SEARCH REPORT

Application Number

EP 23 30 6431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/038286 A1 (CABOT CORP [US]; LU QI [CN]) 27 February 2020 (2020-02-27) * paragraph [0057]; claims 8-10, 20; examples 3, 7-8 * | 1-15 | INV. H01M4/04 H01M4/13 H01M4/505 H01M4/525 |
| X | WO 2020/197672 A1 (CABOT CORP [US]) 1 October 2020 (2020-10-01) | 12,13 | H01M4/62 C01B32/174 |
| A | * examples 2, 9, 10 * | 1-11,14, 15 | |

TECHNICAL FIELDS
SEARCHED      (IPC)

H01M
C01B

The present search report has been drawn up for all claims

| Place of search | Date of completion of the search | Examiner |
|---|---|---|
| The Hague | 19 February 2024 | Mattheis, Chris |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

34

## ANNEX TO THE EUROPEAN SEARCH REPORT
## ON EUROPEAN PATENT APPLICATION NO.

**EP 23 30 6431**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-02-2024**

| Patent document cited in search report | Publication date | Patent family member(s) | | Publication date |
|---|---|---|---|---|
| WO 2020038286 A1 | 27-02-2020 | EP | 3841632 A1 | 30-06-2021 |
| | | JP | 7159452 B2 | 24-10-2022 |
| | | JP | 2021535553 A | 16-12-2021 |
| | | KR | 20210043668 A | 21-04-2021 |
| | | US | 2021305575 A1 | 30-09-2021 |
| | | WO | 2020038286 A1 | 27-02-2020 |
| WO 2020197672 A1 | 01-10-2020 | CN | 113826239 A | 21-12-2021 |
| | | CN | 113841270 A | 24-12-2021 |
| | | EP | 3942625 A1 | 26-01-2022 |
| | | EP | 3942632 A1 | 26-01-2022 |
| | | JP | 7177951 B2 | 24-11-2022 |
| | | JP | 7407201 B2 | 28-12-2023 |
| | | JP | 2022527706 A | 03-06-2022 |
| | | JP | 2022527707 A | 03-06-2022 |
| | | KR | 20210137562 A | 17-11-2021 |
| | | KR | 20210141614 A | 23-11-2021 |
| | | US | 2022131156 A1 | 28-04-2022 |
| | | US | 2022181625 A1 | 09-06-2022 |
| | | WO | 2020197670 A1 | 01-10-2020 |
| | | WO | 2020197672 A1 | 01-10-2020 |

EPO FORM P0459

For more details about this annex : see Official Journal of the European Patent Office, No. 12/82

## REFERENCES CITED IN THE DESCRIPTION

**Patent documents cited in the description**

- CN 106711453 A
- CN 104766978 B
- CN 104868125 B

**Non-patent literature cited in the description**

- **BRUNAUER** ; **EMMET** ; **TELLER**. Adsorption of Gases in Multi-molecular Layers. *J. Am. Chem. Soc.*, 1938, vol. 60, 309-319
- **S. BRUNAUER** ; **P. H. EMMETT** ; **E. TELLER**. *J. Am. Chem. Soc.*, 1938, vol. 60, 309-319
- **CHIOU K. et al.** *PNAS*, 2018, vol. 115 (22), 5703-5708
- **HAWLEY** ; **W. BLAKE** ; **J. LI**. *Journal of Energy Storage*, 2019, vol. 26, 100994